(19) Europäisches Patentamt / European Patent Office / Office européen des brevets

(11) **EP 4 071 661 B1**

(12) **EUROPEAN PATENT SPECIFICATION**

(45) Date of publication and mention
of the grant of the patent:
**17.06.2026 Bulletin 2026/25**

(21) Application number: **20910434.8**

(22) Date of filing: **09.09.2020**

(51) International Patent Classification (IPC):
**B60W 50/029** (2012.01)    **B60W 60/00** (2020.01)
**G06V 20/56** (2022.01)

(52) Cooperative Patent Classification (CPC):
**G06V 20/56; B60W 50/029; B60W 60/0015;**
B60W 2050/0215; B60W 2050/0292;
B60W 2556/45; B60W 2756/10

(86) International application number:
**PCT/CN2020/114265**

(87) International publication number:
**WO 2021/135371 (08.07.2021 Gazette 2021/27)**

(54) **AUTOMATIC DRIVING METHOD, RELATED DEVICE AND COMPUTER-READABLE STORAGE MEDIUM**

AUTOMATISCHES FAHRVERFAHREN, ZUGEHÖRIGE VORRICHTUNG UND COMPUTERLESBARES SPEICHERMEDIUM

PROCÉDÉ DE CONDUITE AUTOMATIQUE, DISPOSITIF ASSOCIÉ ET SUPPORT DE STOCKAGE LISIBLE PAR ORDINATEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.12.2019 CN 201911425837**

(43) Date of publication of application:
**12.10.2022 Bulletin 2022/41**

(73) Proprietor: **Yinwang Intelligent Technologies Co., Ltd.**
**Shenzhen, Guangdong 518129 (CN)**

(72) Inventors:
• **LIU, Jiqiu**
 **Shenzhen, Guangdong 518129 (CN)**
• **WU, Yong**
 **Shenzhen, Guangdong 518129 (CN)**
• **LIU, Jianqin**
 **Shenzhen, Guangdong 518129 (CN)**

(74) Representative: **Pfenning, Meinig & Partner mbB Patent- und Rechtsanwälte**
**Theresienhöhe 11a**
**80339 München (DE)**

(56) References cited:
**CN-A- 108 010 360    CN-A- 109 733 391**
**CN-A- 110 057 373    CN-A- 110 356 401**
**US-A1- 2019 049 957   US-A1- 2019 225 212**
**US-A1- 2019 291 726   US-A1- 2019 387 060**

**Description**

**TECHNICAL FIELD**

This application relates to the field of artificial intelligence technologies, and in particular, to an autonomous driving method, a related device, and a computer-readable storage medium.

**BACKGROUND**

Artificial intelligence (Artificial Intelligence, AI) is a theory, a method, a technology, or an application system that simulates, extends, and expands human intelligence by using a digital computer or a machine controlled by the digital computer, to perceive an environment, obtain knowledge, and achieve an optimal result based on the knowledge. In other words, artificial intelligence is a branch of computer science, and is intended to understand the essence of intelligence and produce a new intelligent machine that can react in a manner similar to human intelligence. Artificial intelligence is to study design principles and implementation methods of various intelligent machines, so that the machines have perceiving, inference, and decision-making functions. Researches in an artificial intelligence field include a robot, natural language processing, computer vision, decision-making and inference, human-computer interaction, recommendation and search, an AI basic theory, and the like.

Autonomous driving is a mainstream application in the field of artificial intelligence. The autonomous driving technology depends on computer vision, a radar, a monitoring apparatus, a global positioning system, and the like to collaborate with each other, to implement autonomous driving of a motor vehicle without human intervention. An autonomous vehicle transports a passenger from one location to another location by using various computing systems. Some autonomous vehicles may require some initial inputs or continuous inputs from an operator (such as a driver or a passenger). The autonomous vehicle allows the operator to switch from a manual driving mode to an autonomous driving mode or a mode between the two modes. Because the self-driving technology does not require a human to drive the motor vehicle, a human driving failure can be effectively avoided in theory, a traffic accident can be reduced, and road transportation efficiency can be improved. Therefore, the self-driving technology attracts increasing attention.

In an existing implementation, a sensor is disposed on the autonomous vehicle, and the sensor may obtain driving status data (for example, a speed, an acceleration, and a heading angle of a surrounding vehicle) of the surrounding vehicle, so that the autonomous vehicle can determine, based on the obtained sensor data, a driving policy that meets a safety requirement. Data needs to be obtained from the sensor, and data obtained by the sensor is generally limited. As a result, when a driving policy that meets a safety requirement is determined based on the obtained data, if the sensor is faulty or has low sensitivity or low precision, a driving policy with poor safety is easily generated. This undoubtedly increases a risk of autonomous driving. Therefore, how to improve accuracy of determining a driving policy that meets a safety requirement, so as to improve safety of safe driving of a vehicle is a technical problem that needs to be urgently resolved.

US 2019/225212 A1 discloses that a system is configured to operate a host vehicle using a driving policy from a policy repository, the host vehicle operating in a lane on a first road, the driving policy governed by a safety model; detect a second vehicle, the second vehicle operating in a second lane; determine whether the second vehicle is an oncoming vehicle or an intersecting vehicle, the oncoming vehicle operating on the first road with the first and second lanes in adjacent bidirectional arrangement, and the intersecting vehicle operating on a second road that intersects the first road; and initiate a vehicle maneuver of the host vehicle to reduce or avoid a collision with the second vehicle, based on the safety model, the vehicle maneuver performed based on whether the second vehicle is an oncoming vehicle or an intersecting vehicle.

**SUMMARY**

The present invention is set out in the appended set of claims. This application provides an autonomous driving method, a related device, and a computer-readable storage medium, to improve accuracy of determining a driving policy that meets a safety requirement, and reduce a risk of autonomous driving.

According to a first aspect, an autonomous driving method is provided, where the method is applied to a cloud server, and the method includes: receiving vehicle attribute information and traveling information of a target vehicle that are reported by the target vehicle, where the vehicle attribute information of the target vehicle is used to generate an autonomous driving policy; obtaining, from an autonomous-driving-policy-layer based on the traveling information, layer information of a first road section on which the target vehicle travels; obtaining a first driving policy based on the layer information of the first road section and the vehicle attribute information of the target vehicle; and sending the first driving policy to the target vehicle.

During implementation of this embodiment of this application, the cloud server may obtain, from the autonomous-driving-policy-layer by using the traveling information reported by the target vehicle, the layer information of the first road section, and then obtain, based on the layer information of the first road section and the vehicle attribute information, a driving policy that meets a safety requirement, so that the target vehicle can perform autonomous driving according to the driving policy determined by the cloud server. The autonomous-driving-policy-layer includes richer information, and a perception defect (for example, the perception defect of a sensor is as follows: data obtained by the sensor is limited, a detection range of the sensor is limited, and detection of the sensor is vulnerable to an environment) of the sensor can be overcome. Therefore, accuracy of determining a driving policy that meets a safety requirement can be improved, and a risk of autonomous driving can be reduced.

In a possible implementation, the cloud server stores a correspondence between a driving policy and a safe passage probability, and the obtaining a first driving policy based on the layer information of the first road section and the vehicle attribute information of the target vehicle includes: obtaining a first safe passage probability based on the layer information of the first road section and the vehicle attribute information of the target vehicle; and obtaining, based on the correspondence between a driving policy and a safe passage probability, the first driving policy corresponding to the first safe passage probability. During implementation of this embodiment of this application, the cloud server may obtain the first safe passage probability based on the layer information of the first road section on which the target vehicle travels and the vehicle attribute information of the target vehicle, and then obtain, by using the preset correspondence between a driving policy and a safe passage probability, the first driving policy corresponding to the first safe passage probability. The layer includes rich information, and the perception defect of the sensor can be overcome. Therefore, in this implementation, accuracy of determining a driving policy that meets a safety requirement can be improved, and a risk of autonomous driving can be reduced.

In a possible implementation, the obtaining a first safe passage probability based on the layer information of the first road section and the vehicle attribute information of the target vehicle includes: calculating the first safe passage probability by using a first model, where the first model includes at least one information item and a weight parameter corresponding to the at least one information item, the at least one information item is an information item obtained through extraction based on the layer information of the first road section and the vehicle attribute information of the target vehicle, and the weight parameter is used to indicate importance of an information item when the information item is used to determine the first safe passage probability.

In a possible implementation, the first model is a model obtained through training based on at least one piece of sample data, the sample data includes at least one information item extracted from layer information of a second road section and the vehicle attribute information of the target vehicle, the second road section is a road section adjacent to the first road section, and an exit of the second road section is an entrance of the first road section. During implementation of this embodiment of this application, because adjacent road sections have a same or similar characteristic, the trained first model is obtained based on the layer information of the second road section and the vehicle attribute information of the target vehicle, so that accuracy of calculating the first safe passage probability by using the first model can be improved.

In a possible implementation, the layer information of the first road section includes at least one of static layer information of the first road section and dynamic layer information of the first road section, the static layer information of the first road section is used to indicate infrastructure information of the first road section, and the dynamic layer information of the first road section is used to indicate dynamic traffic information of the first road section. During implementation of this embodiment of this application, the cloud server may obtain, from the autonomous-driving-policy-layer by using the traveling information reported by the target vehicle, the layer information of the first road section on which the target vehicle travels, and then obtain, based on the layer information of the first road section and the vehicle attribute information, a driving policy that meets a safety requirement, so that the target vehicle can perform autonomous driving according to the driving policy determined by the cloud server. The autonomous-driving-policy-layer includes richer information, static layer information of a road ensures that a driving path can be efficiently determined and an obstacle can be avoided during autonomous driving, and dynamic layer information of the road ensures that an unexpected situation can be responded to in a timely manner during autonomous driving. Therefore, in this implementation, the perception defect (for example, the perception defect of the sensor is as follows: data obtained by the sensor is limited, a detection range of the sensor is limited, and detection of the sensor is vulnerable to an environment) of the sensor can be overcome. Therefore, accuracy of determining a driving policy that meets a safety requirement can be improved, and a risk of autonomous driving can be reduced.

In a possible implementation, the static layer information of the first road section includes at least one of a lane attribute, digital device information, and greenbelt information, and the dynamic layer information of the first road section includes at least one of weather information, road surface information, a congestion status of the first road section in a first time period, a probability that a pedestrian and a non-motor vehicle travel on the first road section in the first time period, and an accident probability that a driving accident occurs on the first road section in the first time period. During implementation of this embodiment of this application, static layer information of a road ensures that a driving path can be efficiently determined and an obstacle can be avoided during autonomous driving, and dynamic layer information of the road ensures that unexpected information can be responded to in a timely manner during autonomous driving.

Therefore, in this implementation, the perception defect (for example, the perception defect of the sensor is as follows: data obtained by the sensor is limited, a detection range of the sensor is limited, and detection of the sensor is vulnerable to an environment) of the sensor can be overcome. Therefore, accuracy of determining a driving policy that meets a safety requirement can be improved, and a risk of autonomous driving can be reduced.

In a possible implementation, the first road section is a road section on which the target vehicle is traveling, and the method further includes: obtaining a second driving policy for the target vehicle travelling on the first road section, where the second driving policy is determined by the target vehicle based on sensor data obtained in real time; and when a similarity between the first driving policy and the second driving policy is less than a first threshold, sending, to the target vehicle, prompt information for switching the second driving policy to the first driving policy. During implementation of this embodiment of this application, the autonomous-driving-policy-layer includes rich information, and the perception defect of the sensor can be overcome. Therefore, this also means that the first driving policy determined by the cloud server based on the autonomous-driving-policy-layer is safer than the second driving policy determined by the target vehicle based on the sensor data obtained in real time. For the purpose of safe driving, when determining that the similarity between the first driving policy and the second driving policy is less than a specified threshold, the cloud server sends, to the target vehicle, the prompt information for switching the second driving policy to the first driving policy, so that the target vehicle performs autonomous driving by using the first driving policy with higher safety, and a risk of autonomous driving can be reduced.

In a possible implementation, the vehicle attribute information of the target vehicle includes at least one of an autonomous driving capability of the target vehicle, sensor distribution information of the target vehicle, and a driving status of a driver in the target vehicle.

According to a second aspect, an embodiment of this application provides an autonomous driving method, where the method is applied to an in-vehicle terminal on a target vehicle, and the method includes: receiving a first driving policy sent by a cloud server, where the first driving policy is the first driving policy obtained in the method according to the first aspect; and performing autonomous driving on the target vehicle according to the first driving policy.

During implementation of this embodiment of this application, the cloud server determines the first driving policy based on an autonomous-driving-policy-layer, and then sends the first driving policy to the target vehicle, so that the target vehicle can perform autonomous driving according to the first driving policy determined by the cloud server. The autonomous-driving-policy-layer includes richer information, and a perception defect (for example, the perception defect of a sensor is as follows: data obtained by the sensor is limited, a detection range of the sensor is limited, and detection of the sensor is vulnerable to an environment) of the sensor can be overcome. Therefore, accuracy of determining a driving policy that meets a safety requirement can be improved, and a risk of autonomous driving can be reduced.

In a possible implementation, the method further includes: obtaining, by using sensor data, a second driving policy used by the target vehicle to travel on a first road section; and the performing autonomous driving on the target vehicle according to the first driving policy includes: performing autonomous driving on the target vehicle according to the first driving policy and the second driving policy. During implementation of this embodiment of this application, when the target vehicle travels on the first road section, the target vehicle may obtain the second driving policy based on the sensor data obtained in real time, and perform autonomous driving on the target vehicle according to the first driving policy and the second driving policy. Therefore, the target vehicle can be prevented from performing autonomous driving on the target vehicle by using a driving policy with low safety, and a risk of autonomous driving can be reduced.

In a possible implementation, the performing autonomous driving on the target vehicle according to the first driving policy and the second driving policy includes: when determining that a similarity between the first driving policy and the second driving policy is greater than a first threshold, performing autonomous driving on the target vehicle according to the first driving policy, or performing autonomous driving on the target vehicle according to the second driving policy; or when determining that a similarity between the first driving policy and the second driving policy is less than the first threshold, performing autonomous driving on the target vehicle according to the first driving policy. During implementation of this embodiment of this application, the autonomous-driving-policy-layer includes rich information, and the perception defect of the sensor can be overcome. Therefore, this also means that the first driving policy determined by the cloud server based on the autonomous-driving-policy-layer is safer than the second driving policy determined by the target vehicle based on the sensor data obtained in real time. For the purpose of safe driving, when determining that the similarity between the first driving policy and the second driving policy is greater than a specified threshold, the target vehicle performs autonomous driving on the target vehicle according to the first driving policy, or performs autonomous driving on the target vehicle according to the second driving policy. When determining that the similarity between the first driving policy and the second driving policy is less than the specified threshold, the target vehicle performs autonomous driving on the target vehicle according to the first driving policy. In this implementation, the target vehicle can be prevented from performing autonomous driving on the target vehicle by using a driving policy with low safety, and a risk of autonomous driving can be reduced.

According to a third aspect, an embodiment of this application provides a cloud server, where the cloud server may include:

a receiving unit, configured to receive vehicle attribute information and traveling information of a target vehicle that are reported by the target vehicle, where the vehicle attribute information of the target vehicle is used to generate an autonomous driving policy; a first obtaining unit, configured to obtain, from an autonomous-driving-policy-layer based on the traveling information, layer information of a first road section on which the target vehicle travels; a second obtaining unit, configured to obtain a first driving policy based on the layer information of the first road section and the vehicle attribute information of the target vehicle; and a first sending unit, configured to send the first driving policy to the target vehicle.

During implementation of this embodiment of this application, the cloud server may obtain, from the autonomous-driving-policy-layer by using the traveling information reported by the target vehicle, the layer information of the first road section on which the target vehicle travels, and then obtain, based on the layer information of the first road section and the vehicle attribute information, a driving policy that meets a safety requirement, so that the target vehicle can perform autonomous driving according to the driving policy determined by the cloud server. The autonomous-driving-policy-layer includes richer information, and a perception defect (for example, the perception defect of a sensor is as follows: data obtained by the sensor is limited, a detection range of the sensor is limited, and detection of the sensor is vulnerable to an environment) of the sensor can be overcome. Therefore, accuracy of determining a driving policy that meets a safety requirement can be improved, and a risk of autonomous driving can be reduced.

In a possible implementation, the cloud server stores a correspondence between a driving policy and a safe passage probability, and the second obtaining unit includes a safe passage probability obtaining unit and a driving policy obtaining unit, where the safe passage probability obtaining unit is configured to obtain a first safe passage probability based on the layer information of the first road section and the vehicle attribute information of the target vehicle, and the driving policy obtaining unit is configured to obtain, based on the correspondence between a driving policy and a safe passage probability, the first driving policy corresponding to the first safe passage probability.

In a possible implementation, the safe passage probability obtaining unit is specifically configured to calculate the first safe passage probability by using a first model, where the first model includes at least one information item and a weight parameter corresponding to the at least one information item, the at least one information item is an information item obtained through extraction based on the layer information of the first road section and the vehicle attribute information of the target vehicle, and the weight parameter is used to indicate importance of an information item when the information item is used to determine the first safe passage probability.

In a possible implementation, the first model is a model obtained through training based on at least one piece of sample data, the sample data includes at least one information item extracted from layer information of a second road section and the vehicle attribute information of the target vehicle, the second road section is a road section adjacent to the first road section, and an exit of the second road section is an entrance of the first road section.

In a possible implementation, the layer information of the first road section includes at least one of static layer information of the first road section and dynamic layer information of the first road section, the static layer information of the first road section is used to indicate infrastructure information of the first road section, and the dynamic layer information of the first road section is used to indicate dynamic traffic information of the first road section.

In a possible implementation, the static layer information of the first road section includes at least one of a lane attribute, digital device information, and greenbelt information, and the dynamic layer information of the first road section includes at least one of weather information, road surface information, a congestion status of the first road section in a first time period, a probability that a pedestrian and a non-motor vehicle travel on the first road section in the first time period, and an accident probability that a driving accident occurs on the first road section in the first time period.

In a possible implementation, the first road section is a road section on which the target vehicle is traveling, and the cloud server further includes: a third obtaining unit, configured to obtain a second driving policy used by the target vehicle to travel on the first road section, where the second driving policy is determined by the target vehicle based on sensor data obtained in real time; and a second sending unit, configured to: when a similarity between the first driving policy and the second driving policy is less than a first threshold, send, to the target vehicle, prompt information for switching the second driving policy to the first driving policy.

According to a fourth aspect, an embodiment of this application provides an autonomous driving apparatus, where the apparatus is applied to an in-vehicle terminal on a target vehicle, and the apparatus may include: a receiving unit, configured to receive a first driving policy sent by a cloud server, where the first driving policy is the first driving policy obtained in the method according to the first aspect; and a control unit, configured to perform autonomous driving on the target vehicle according to the first driving policy.

In a possible implementation, the apparatus further includes: a second driving policy obtaining unit, configured to obtain, by using sensor data, a second driving policy used by the target vehicle to travel on a first road section; and the control unit is specifically configured to perform autonomous driving on the target vehicle according to the first driving policy and the second driving policy.

In a possible implementation, the control unit is specifically configured to: when determining that a similarity between the first driving policy and the second driving policy is greater than a first threshold, perform autonomous driving on the target vehicle according to the first driving policy, or perform autonomous driving on the target vehicle according to the second driving policy; or when determining that a similarity between the first driving policy and the second driving policy is less than the first threshold, perform autonomous driving on the target vehicle according to the first driving policy.

According to a fifth aspect, an embodiment of this application provides a cloud server, where the cloud server may include a memory and a processor, the memory is configured to store a computer program that supports a coordinated device in performing the foregoing method, the computer program includes program instructions, and the processor is configured to invoke the program instructions to perform the method according to the first aspect.

According to a sixth aspect, an embodiment of this application provides an in-vehicle terminal, where the in-vehicle terminal may include a memory and a processor, the memory is configured to store a computer program that supports a coordinated device in performing the foregoing method, the computer program includes program instructions, and the processor is configured to invoke the program instructions to perform the method according to the second aspect.

According to a seventh aspect, this application provides a chip system, where the chip system may perform any method according to the first aspect, so that a related function is implemented. In a possible design, the chip system further includes a memory. The memory is configured to store program instructions and data. The chip system may include a chip, or may include a chip and another discrete component.

According to an eighth aspect, this application provides a chip system, where the chip system may perform any method according to the second aspect, so that a related function is implemented. In a possible design, the chip system further includes a memory. The memory is configured to store program instructions and data. The chip system may include a chip, or may include a chip and another discrete component.

According to a ninth aspect, an embodiment of this application further provides a computer-readable storage medium. The computer storage medium stores a computer program, the computer program includes a program instruction, and when the program instruction is executed by a processor, the processor is enabled to perform the method in the first aspect.

According to a tenth aspect, an embodiment of this application further provides a computer-readable storage medium. The computer storage medium stores a computer program, the computer program includes a program instruction, and when the program instruction is executed by a processor, the processor is enabled to perform the method in the second aspect.

According to an eleventh aspect, an embodiment of this application further provides a computer program, where the computer program includes computer software instructions, and when the computer software instructions are executed by a computer, the computer is enabled to perform any autonomous driving method according to the first aspect.

According to a twelfth aspect, an embodiment of this application further provides a computer program, where the computer program includes computer software instructions, and when the computer software instructions are executed by a computer, the computer is enabled to perform any autonomous driving method according to the second aspect.

## BRIEF DESCRIPTION OF DRAWINGS

FIG. 1a is a schematic diagram of an autonomous-driving-policy-layer according to an embodiment of this application;
FIG. 1b is a schematic diagram of another autonomous-driving-policy-layer according to an embodiment of this application;
FIG. 1c is a schematic diagram of another autonomous-driving-policy-layer according to an embodiment of this application;
FIG. 1d is a schematic diagram of another autonomous-driving-policy-layer according to an embodiment of this application;
FIG. 1e is a schematic diagram of a network architecture of an autonomous driving system according to an embodiment of this application;
FIG. 1f is a functional block diagram of an autonomous driving apparatus 110 according to an embodiment of this application;
FIG. 1g is a schematic diagram of a structure of a self-driving system according to an embodiment of this application;
FIG. 2 is a schematic flowchart of an autonomous driving method according to an embodiment of this application;
FIG. 3a is a schematic flowchart of another self-driving method according to an embodiment of this application;
FIG. 3b is a schematic flowchart 1 of an object detection and identification method according to an embodiment of this application;
FIG. 3c is a schematic flowchart 2 of an object detection and identification method according to an embodiment of this application;
FIG. 3d is a schematic diagram of a structure of a convolutional neural network model according to an embodiment of this application;
FIG. 4 is a schematic flowchart of another self-driving method according to an embodiment of this application;
FIG. 5 is a schematic diagram of a structure of a cloud server according to an embodiment of this application;

FIG. 6 is a schematic diagram of a structure of an autonomous driving apparatus according to an embodiment of this application; and

FIG. 7 is a schematic diagram of a structure of another cloud server according to an embodiment of this application.

## DESCRIPTION OF EMBODIMENTS

The following describes the embodiments of this application with reference to the accompanying drawings in the embodiments of this application.

In the specification and accompanying drawings of this application, the terms "first", "second", and the like are intended to distinguish between different objects or distinguish between different processing of a same object, but are not used to describe a particular order of the objects. In addition, the terms "include", "contain", and any other variants thereof mentioned in descriptions of this application are intended to cover a non-exclusive inclusion. For example, a process, a method, a system, a product, or a device that includes a series of steps or units is not limited to the listed steps or units, but optionally includes other unlisted steps or units, or optionally includes other inherent steps or units of the process, the method, the product, or the device. It should be noted that in the embodiments of this application, the word "an example", "for example", or the like is used to represent giving an example, an illustration, or a description. Any embodiment or design method described as "example" or "for example" in the embodiments of this application should not be explained as being more preferred or having more advantages than another embodiment or design solution. Exactly, use of the term such as "example" or "for example" is intended to present a related concept in a specific manner. In the embodiments of this application, "A and/or B" represents two meanings: A and B, and A or B. "A, and/or B, and/or C" represents any one of A, B, and C, or represents any two of A, B, and C, or represents A, B, and C.

To facilitate understanding of the technical solutions described in this application, the following describes some terms in this application:

(1) Autonomous vehicle (Autonomous vehicles; Self-piloting automobile)

In the embodiments of this application, the autonomous vehicle is also referred to as a driverless car, a computer driving car, or a wheeled mobile robot, and is an intelligent car that implements unmanned driving by using a computer system. In actual application, the autonomous vehicle depends on cooperation among artificial intelligence, visual computing, a radar, a monitoring apparatus, and a global positioning system, so that a computer device can automatically and safely operate a motor vehicle without any active human operation.

(2) Autonomous-driving-policy-layer

In the embodiments of this application, the autonomous-driving-policy-layer is a subset of an autonomous driving map, and may be used to indicate a vehicle to perform autonomous driving. Specifically, the autonomous-driving-policy-layer may include static layer information, and may also include dynamic layer information. Each layer may be considered as a specific map. For example, the static layer information may be a connection relationship between roads, a lane line location, a quantity of lane lines, and another object around a road. For another example, the static layer information may be information about a traffic sign (for example, a location of a traffic light, a height of a traffic light, or sign content such as a speed limit sign, a winding road sign, or a slow sign), information about a tree around a road, or information of a building. For example, the dynamic layer information may be dynamic traffic information, and the information may be associated with a time point (or a time period), or may not be associated with a time point (or a time period). In some implementations, a format of the dynamic layer information may be a timestamp (or a time period) + a road section + information, for example, weather information of a road section 1 at a moment or in a time period, and road surface information (for example, road cutoff, road maintenance, an object dropped on a road, or road flooding) of a road section 1 at a moment or in a time period.

In some implementations, the layer information included in the autonomous-driving-policy-layer may be two-dimensional information, or may be three-dimensional information. In the embodiments of this application, the two-dimensional information is also referred to as vector information. A vector is a quantity having both a magnitude and a direction. For example, the two-dimensional information may be coordinate information of an obstacle in a road. In the embodiments of this application, the three-dimensional information is information that further includes some abstract information in addition to the two-dimensional information, and the abstract information is used to reflect a characteristic of an object. For example, the three-dimensional information may be coordinate information of an obstacle in a road and a size of the obstacle.

In the embodiments of this application, an object that uses the autonomous-driving-policy-layer is generally a vehicle that has an autonomous driving capability.

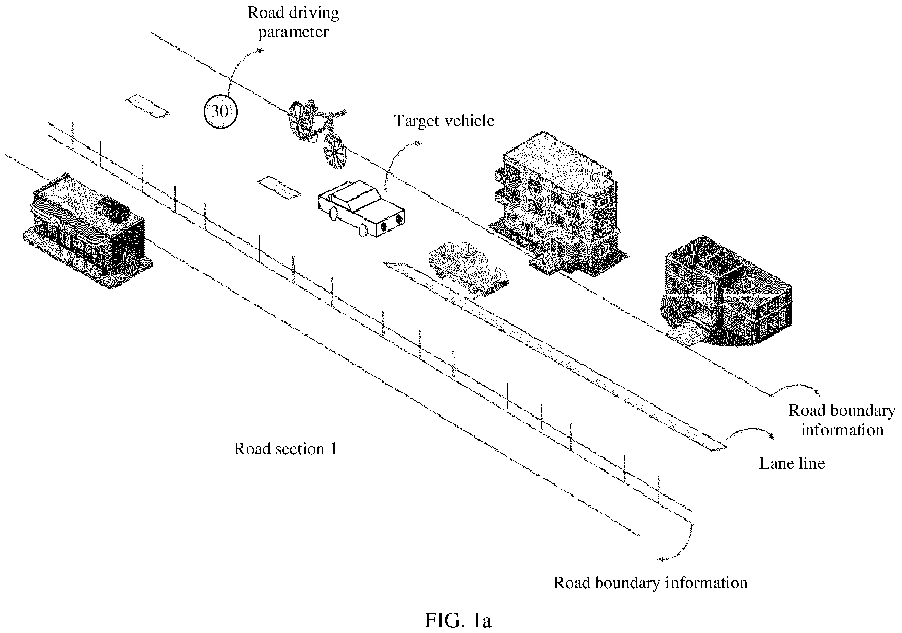

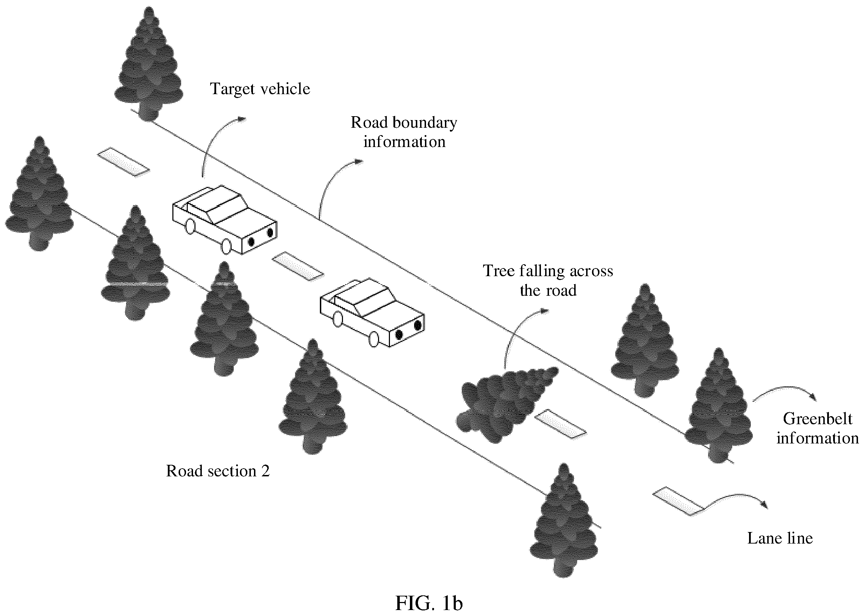

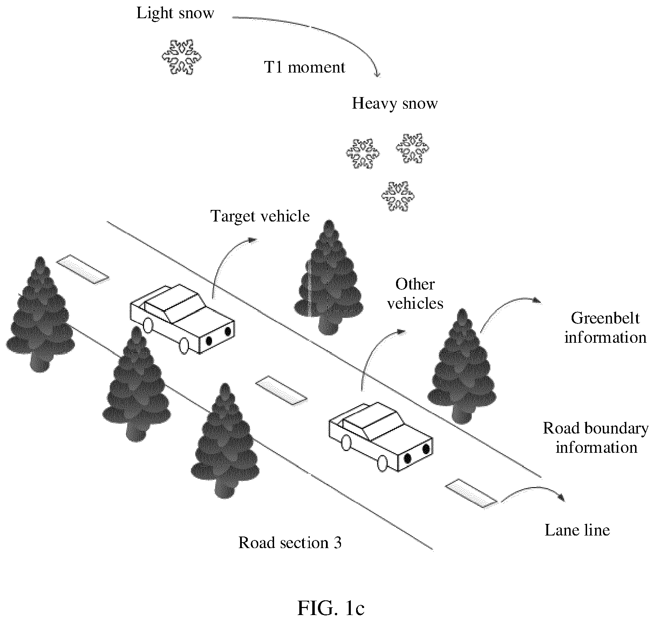

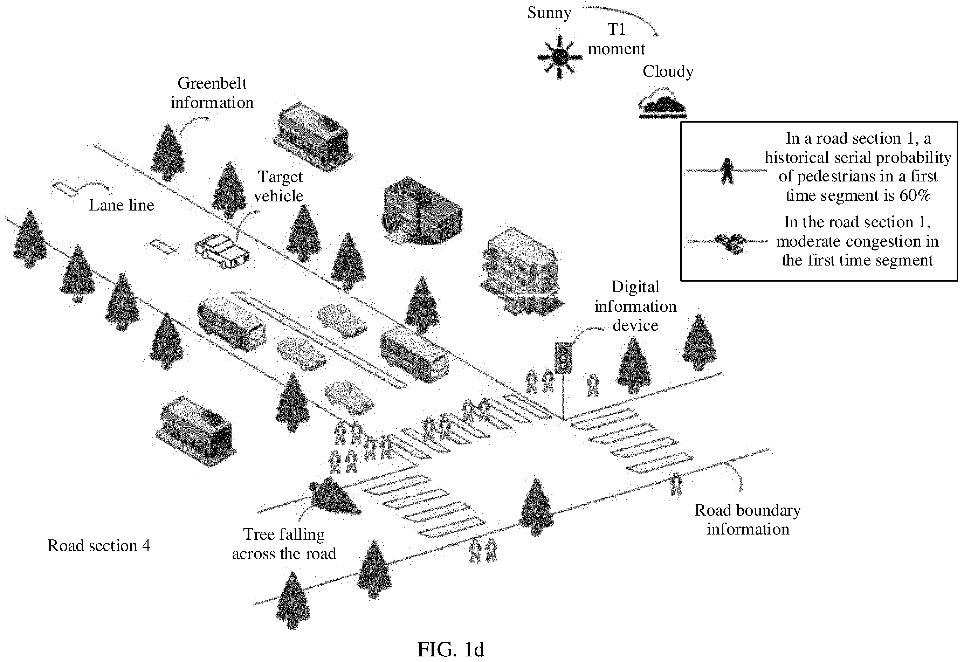

In the embodiments of this application, FIG. 1a to FIG. 1d are schematic diagrams of an autonomous-driving-policy-layer according to an embodiment of this application. A road section 1 is used as an example. As shown in FIG. 1a, the autonomous-driving-policy-layer includes static layer information of a road, for example, lane line information, a quantity of lanes, road boundary information, and a road driving parameter. A road section 2 is used as an example. As shown in FIG. 1b, the autonomous-driving-policy-layer includes static layer information of a road, for example, lane line information, a quantity of lanes, road boundary information, and greenbelt information, and further includes dynamic layer information such as a tree that falls across a road surface. A road section 3 is used as an example. As shown in FIG. 1c, the autonomous-driving-policy-layer includes static layer information of a road, for example, lane line information, a quantity of lanes, road boundary information, and greenbelt information, and further includes dynamic layer information such as weather information (for example, mild snow to heavy snow at a moment T1). A road section 4 is used as an example. As shown in FIG. 1d, the autonomous-driving-policy-layer includes static layer information of a road, for example, lane line information, a quantity of lanes, road boundary information, greenbelt information, and a digital information device, and further includes dynamic layer information such as weather information (clear to overcast at a moment T1), a historical probability 60% that a pedestrian and a non-motor vehicle travel, and moderate congestion.

In the embodiments of this application, the autonomous-driving-policy-layer may be considered as an extension of a conventional hardware sensor (for example, a radar, a laser rangefinder, or a camera), includes richer data, and is not affected by an environment, an obstacle. or interference. Specifically, the static layer information of the road ensures that a driving path can be efficiently determined and an obstacle can be avoided during autonomous driving, and the dynamic layer information of the road ensures that an unexpected situation can be responded to in a timely manner during autonomous driving. In this implementation, a perception defect of the conventional hardware sensor can be effectively overcome. For example, the perception defect of the sensor is as follows: data obtained by the sensor is limited, a detection range of the sensor is limited, and detection of the sensor is vulnerable to an environment.

In actual application, the static layer information of the road may be considered as prior information. Specifically, the prior information is some information that can be collected in advance and that does not change in short time. In other words, the information exists objectively, and does not change with an external thing. Therefore, the information may be collected in advance and transmitted as prior information to the autonomous vehicle for decision-making.

(3) Autonomous driving policy

Currently, there are two recognized technical level standards for auto-driving vehicles in the global automotive industry, and the two standards are respectively proposed by the National Highway Traffic Safety Administration (NHTSA for short) and the SAE International (SAE for short). Existing autonomous driving level distribution may be shown in Table 1.

Table 1 Autonomous driving level table

| Autonomous driving level | | Name | Definition | Driving operation | Surrounding monitoring | Takeover | Takeover |
|---|---|---|---|---|---|---|---|
| NHTSA | SAE | | | | | | |
| L0 | L0 | Manual driving | A human driver fully drives a car. | Human driver | Human driver | Human driver | None |
| L1 | L1 | Assisted driving | A vehicle provides driving for one operation in a steering wheel and acceleration/dec eleration, and a human driver is responsible for remaining driving actions. | Human driver and vehicle | Human driver | Human driver | Limited scenarios |
| L2 | L2 | Partial autonomous driving | A vehicle provides driving for a plurality of operations in a steering wheel and acceleration/dec eleration, and a human driver is responsible for remaining | Vehicle | Human driver | Human driver | |

(continued)

| Autonomous driving level | | Name | Definition | Driving operation | Surrounding monitoring | Takeover | Takeover |
|---|---|---|---|---|---|---|---|
| NHTSA | SAE | | | | | | |
| | | | driving actions. | | | | |
| L3 | L3 | Conditional autonomous driving | A vehicle completes most driving operations, and a human driver needs to keep the driver's attention for emergencies. | Vehicle | Vehicle | Human driver | |
| L4 | L4 | High autonomous driving | A vehicle completes all driving operations, and a human driver does not need to keep the driver's attention, but road and environment conditions are limited. | Vehicle | Vehicle | Vehicle | |
| | L5 | Fully autonomous driving | A vehicle completes all driving operations, and a human driver | Vehicle | Vehicle | Vehicle | All scenarios |
| | | | does not need to keep the driver's attention. | | | | |

In the embodiments of this application, the autonomous driving policy may include an autonomous driving level, or may include an instruction for instructing a vehicle to accelerate, decelerate, proceed, stop, and start, or may include a speed, an acceleration, a movement direction, a location, and the like of the vehicle. In actual driving, a specific driving policy for use needs to be determined based on the static layer information of the road and/or the dynamic layer information of the road, for example, a specific autonomous driving level for use.

An autonomous driving method provided in the embodiments of this application is applied to another device (for example, a cloud server) that has an autonomous-driving control function, or is applied to a vehicle that has an autonomous driving function. The following specifically describes the method.

In an implementation, the cloud server is configured to implement the autonomous driving method provided in the embodiments of this application. A first driving policy corresponding to a first road section (the first road section is any road section in traveling information) on which a target vehicle travels is obtained by using an autonomous driving map stored on the cloud server or by using a layer that is of an autonomous driving policy, that is received by the cloud server, and that is transferred by another device, and the first driving policy is sent to the target vehicle. Herein, the first driving policy is used to indicate the target vehicle to perform autonomous driving according to the first driving policy. In addition, when the first road section is a road section on which the target vehicle is traveling, the cloud server may further obtain a second driving policy used by the target vehicle to travel on the first road section. The second driving policy is determined by the target vehicle based on sensor data obtained in real time. When determining that a similarity between the first driving policy and the second driving policy meets a preset condition, the cloud server sends, to the target vehicle, prompt information for switching the second driving policy to the first driving policy. In the embodiments of this application, that the similarity between the first driving policy and the second driving policy meets the preset condition may include that the similarity between the first driving policy and the second driving policy meets a specified first threshold, or may include that the similarity between the first driving policy and the second driving policy meets a function relationship. This is not specifically limited in the embodiments of this application. In this implementation, a risk of autonomous driving of the target vehicle can be reduced.

In an implementation, a target vehicle may receive an autonomous driving map sent by a cloud server, to obtain, from the autonomous driving map, a first driving policy corresponding to a first road section on which the target vehicle travels, and then may perform autonomous driving on the target vehicle according to the first driving policy. In addition, for the target vehicle, the target vehicle may further obtain a second driving policy by using sensor data obtained in real time.

When determining that a similarity between the first driving policy and the second driving policy is greater than a specified first threshold, the target vehicle may perform autonomous driving on the target vehicle according to the first driving policy, or perform autonomous driving on the target vehicle according to the second driving policy. When determining that the similarity between the first driving policy and the second driving policy is less than the specified first threshold, the target vehicle performs autonomous driving on the target vehicle according to the first driving policy. In this implementation, a risk of autonomous driving of the target vehicle can be reduced.

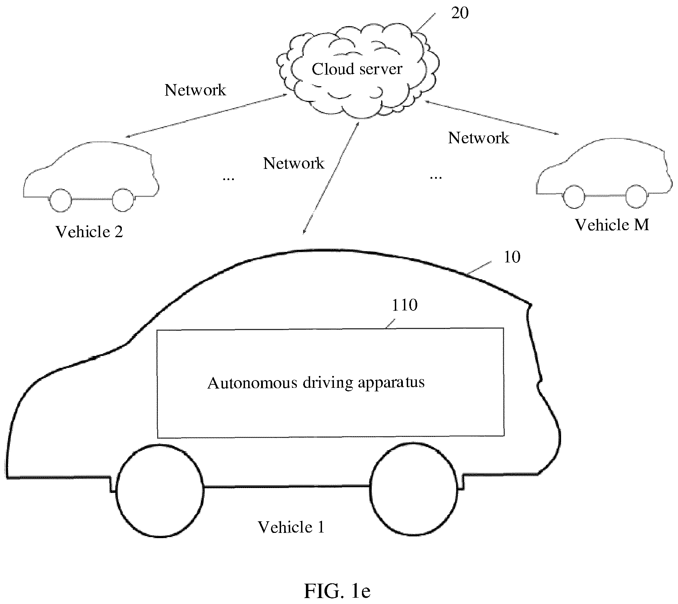

FIG. 1e is a schematic diagram of a network architecture of an autonomous driving system according to an embodiment of this application. As shown in FIG. 1e, the autonomous driving system architecture includes a vehicle 10 (namely, a vehicle 1), a vehicle 2, a vehicle M (M is an integer greater than 0, and a quantity of vehicles shown in the figure is an example for description, and should not constitute a limitation), and a cloud server 20. In actual application, the cloud server 20 may establish a communication connection to a plurality of vehicles 10 by using a wired network or a wireless network.

In this embodiment of this application, as shown in FIG. 1e, the vehicle 10 includes an autonomous driving apparatus 110.

In this embodiment of this application, the cloud server 20 may run, by using multi-dimensional data included in an autonomous-driving-policy-layer, a related program that is stored on the cloud server 20 and that is used to control autonomous driving of a car, to control the vehicle 1, the vehicle 2, and the vehicle M (for example, indicate, by using a driving policy, a vehicle how to travel). The related program for controlling autonomous driving of the car may be a program for managing interaction between the autonomous vehicle and an obstacle on a road, a program for controlling a route or a speed of the autonomous vehicle, or a program for controlling interaction between the autonomous vehicle and another autonomous vehicle on the road.

In some examples, the cloud server obtains, from the autonomous-driving-layer, layer information of a road section (for example, a first road section) on which the vehicle travels, and then sends, to the autonomous vehicle based on the layer information of the first road section on which the vehicle travels, a driving policy recommended for driving on the first road section. For example, the cloud server determines, by using dynamic layer information (for example, the dynamic layer information includes a dropped object) of the first road section, that there is an obstacle ahead, and notifies the autonomous vehicle how to bypass the obstacle. For another example, the cloud server determines, by using dynamic layer information (for example, the dynamic layer information includes road surface information) of the first road section, that a road surface is flooded, and notifies the autonomous vehicle how to drive on the flooded road surface. The cloud server sends a response to the autonomous vehicle, to indicate how the vehicle should travel in a given scenario. For example, based on the layer information of the first road section, the cloud server may determine that there is a temporary parking sign ahead on a road, and notify the autonomous vehicle how to bypass the road. Correspondingly, the cloud server sends a recommended operation mode (for example, indicate the vehicle to perform lane change to another road) that is used by the autonomous vehicle to pass through a closed road section (or an obstacle). In actual application, the cloud server may further send the recommended operation mode to another vehicle that may encounter a same obstacle in the area, to assist the another vehicle in identifying a closed lane and knowing how to pass through the lane.

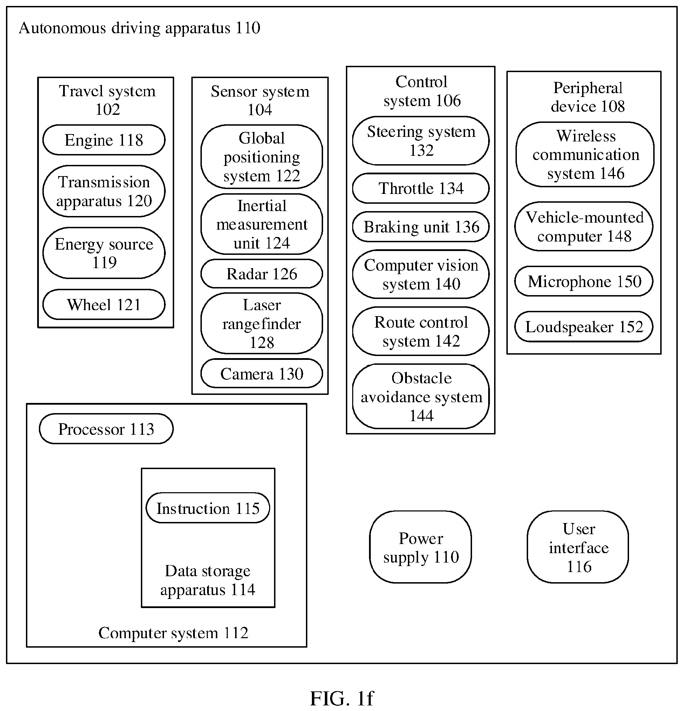

FIG. 1f is a functional block diagram of an autonomous driving apparatus 100 according to an embodiment of this application. In some implementations, the autonomous driving apparatus 100 may be configured as a fully autonomous driving mode, a partially autonomous driving mode, or a manual driving mode. The autonomous driving level proposed in SAE in Table 1 is used as an example. The fully autonomous driving mode may be L5, indicating that the vehicle completes all driving operations, and the human driver does not need to keep the driver's attention. The partially autonomous driving mode may be L1, L2, L3, and L4. L1 indicates that the vehicle provides driving for one operation in a steering wheel and acceleration/deceleration, and the human driver is responsible for remaining driving operations. L2 indicates that the vehicle provides driving for a plurality of operations in a steering wheel and acceleration/deceleration, and the human driver is responsible for remaining driving actions. L3 indicates that the vehicle completes most driving operations, and the human driver needs to keep the driver's attention for emergencies. L4 indicates that the vehicle completes all driving operations, and the human driver does not need to keep the driver's attention, but road and environment conditions are limited. The manual driving mode may be L0, indicating that the human driver fully drives the car.

In actual application, the autonomous driving apparatus 100 may control the autonomous driving apparatus 100 while in an autonomous driving mode, and may determine current states of the vehicle and an ambient environment by using a human operation, determine possible behavior of at least one another vehicle in the ambient environment, determine a confidence level corresponding to a possibility that the another vehicle performs the possible behavior, and control the autonomous driving apparatus 110 based on determined information. When the autonomous driving apparatus 110 is in the fully autonomous driving mode, the autonomous driving apparatus 110 may be operated without human interaction.

The autonomous driving apparatus 110 may include a plurality of subsystems such as a travel system 102, a sensor system 104, a control system 106, one or more peripheral devices 108, a power supply 110, a computer system 112, and a user interface 116. In some implementations, the autonomous driving apparatus 110 may include more or fewer subsystems, and each subsystem may include a plurality of elements. In addition, the subsystems and the elements of the autonomous driving apparatus 110 may be interconnected in a wired or wireless manner.

In this embodiment of this application, the travel system 102 may include a component that provides power for the autonomous driving apparatus 110 to move. In some implementations, the travel system 102 may include an engine 118, an energy source 119, a drive apparatus 120, and a wheel/tire 121. The engine 118 may be an internal combustion engine, an electric motor, an air compression engine, or a combination of other types of engines, for example, a hybrid engine including a gasoline engine and an electric motor, or a hybrid engine including an internal combustion engine and an air compression engine. In actual application, the engine 118 converts the energy source 119 into mechanical energy.

In this embodiment of this application, the energy source 119 may include but is not limited to gasoline, diesel, other petroleum-based fuel, propane, other compressed-gas-based fuel, ethanol, a solar panel, a battery, and another power source. The energy source 119 may further provide energy for another system of the autonomous driving apparatus 110.

In this embodiment of this application, the drive apparatus 120 may transfer mechanical power from the engine 118 to the wheel 121. The drive apparatus 120 may include a gearbox, a differential, and a drive shaft. In some implementations, the drive apparatus 120 may further include another component such as a clutch. The drive shaft may include one or more shafts that may be coupled to one or more wheels 121.

In this embodiment of this application, the sensor 104 may include several sensors that sense information about an ambient environment of the autonomous driving apparatus 110. For example, the sensor system 104 may include a positioning system 122 (herein, the positioning system may be a GPS system, or may be a BeiDou system or another positioning system), an inertial measurement unit (Inertial measurement unit, IMU) 124, a radar 126, a laser rangefinder 128, and a camera 130. The sensor system 104 may further include a sensor of an internal system of the monitored autonomous driving apparatus 110, for example, an in-vehicle air quality monitor, a fuel gauge, and an oil temperature gauge. One or more pieces of sensor data from the sensor may be used to detect an object and a corresponding characteristic (for example, a location, a shape, a direction, and a speed) thereof. The detection and identification are key functions for a safe operation of the autonomous driving apparatus 110.

In this embodiment of this application, the positioning system 122 may be configured to estimate a geographical location of the autonomous driving apparatus 110. The IMU 124 is configured to sense location and orientation changes of the autonomous driving apparatus 110 based on an inertial acceleration. In some implementations, the IMU 124 may be a combination of an accelerometer and a gyroscope.

In this embodiment of this application, the radar 126 may sense an object in the ambient environment of the autonomous driving apparatus 110 by using a radio signal. In some implementations, in addition to sensing an object, the radar 126 may be further configured to sense a speed and/or a proceeding direction of the object.

In this embodiment of this application, the laser rangefinder 128 may sense, by using a laser, an object in an environment in which the autonomous driving apparatus 110 is located. In some implementations, the laser rangefinder 128 may include one or more laser sources, a laser scanner, one or more detectors, and another system component.

In this embodiment of this application, the camera 130 may be configured to capture a plurality of images of the ambient environment of the autonomous driving apparatus 110. In some implementations, the camera 130 may be a static camera or a video camera. This is not specifically limited in this embodiment of this application.

In this embodiment of this application, the control system 106 may control operations of the autonomous driving apparatus 110 and the component. The control system 106 may include various elements, including a steering system 132, a throttle 134, a braking unit 136, a computer vision system 140, a route control system 142, and an obstacle avoidance system.

In this embodiment of this application, the steering system 132 may be operated to adjust a proceeding direction of the autonomous driving apparatus 110. For example, in an embodiment, the steering system 132 may be a steering wheel system.

In this embodiment of this application, the throttle 134 is configured to: control an operation speed of the engine 118, and control a speed of the autonomous driving apparatus 110.

In this embodiment of this application, the braking unit 136 is configured to control the speed of the autonomous driving apparatus 110. The braking unit 136 may use friction to slow down the wheels 121. In some implementations, the braking unit 136 may convert kinetic energy of the wheel 121 into a current. The braking unit 136 may reduce a rotation speed of the wheel 121 in another form, to control the speed of the autonomous driving apparatus 110.

In this embodiment of this application, the computer vision system 140 may be operated to process and analyze an image captured by the camera 130, to identify an object and/or a feature in the ambient environment of the autonomous driving apparatus 110. In some implementations, the object and/or the feature mentioned herein may include but are/is not limited to a traffic signal, a road boundary, and an obstacle. The computer vision system 140 may use an object recognition algorithm, a structure from motion (Structure from Motion, SFM) algorithm, video tracking, and other computer vision technologies. In some implementations, the computer vision system 140 may be configured to: map an environment, track an object, estimate a speed of an object, and the like.

In this embodiment of this application, the route control system 142 is configured to determine a driving route of the autonomous driving apparatus 110. In some implementations, the route control system 142 may determine the driving route for the autonomous driving apparatus 110 based on data from the sensor, the positioning system 122, and one or more predetermined maps.

In this embodiment of this application, the obstacle avoidance system 144 is configured to identify, evaluate, and avoid or bypass, in another manner, a potential obstacle in an environment of the autonomous driving apparatus 110.

It may be understood that, in some implementations, the control system 106 may add or alternatively include a component other than those shown and described in FIG. 1f. Alternatively, the control system 106 may not include some of the foregoing components.

In this embodiment of this application, the autonomous driving apparatus 110 interacts with an external sensor, another vehicle, another computer system, or a user by using the peripheral device 108. The peripheral device 108 may include a wireless communications system 146, a vehicle-mounted computer 148, a microphone 150, and/or a loudspeaker 152.

In some implementations, the peripheral device 108 provides means for interaction between a user of the autonomous driving apparatus 110 and the user interface 116. For example, the vehicle-mounted computer 148 may provide information for the user of the autonomous driving apparatus 110. The user interface 116 may further operate the vehicle-mounted computer 148 to receive user input. The vehicle-mounted computer 148 may perform operations through a touchscreen. In another case, the peripheral device 108 may provide means for communication between the autonomous driving apparatus 110 and another device in the vehicle. For example, the microphone 150 may receive audio, for example, a voice command or another audio input, from the user of the autonomous driving apparatus 110. Similarly, the loudspeaker 150 may output audio to the user of the autonomous driving apparatus 110.

In this embodiment of this application, the wireless communications system 146 may perform wireless communication with one or more devices directly or by using a communication network. For example, the wireless communications system 146 may use 3G cellular communication such as CDMA, EVDO, GSM/GPRS, or 4G cellular communication such as LTE, or perform communication through a 5G cellular network. In some implementations, the wireless communications system 146 may communicate with a wireless local area network (Wireless local area network, WLAN) through Wi-Fi. In some implementations, the wireless communications system 146 may directly communicate with a device through an infrared link, Bluetooth, or ZigBee. Other wireless protocols such as various vehicle communications systems may be used, for example, the wireless communications system 146 may include one or more dedicated short-range communications (Dedicated short-range communications, DSRC) devices.

In this embodiment of this application, the power supply 110 may supply power to various components of the autonomous driving apparatus 110. In some implementations, the power supply 110 may be a rechargeable lithium-ion or lead-acid battery. One or more battery packs of the battery may be configured as a power supply to supply power to various components of the autonomous driving apparatus 110. In some implementations, the power supply 110 and the energy source 119 may be implemented together, for example, configured together as in some battery electric vehicles.

In this embodiment of this application, some or all functions of the autonomous driving apparatus 110 are controlled by the computer system 112. The computer system 112 may include at least one processor 113. The processor 113 executes an instruction 115 stored in a non-transient computer-readable medium such as a data storage apparatus 114. The computer system 112 may be a plurality of computing devices that control an individual component or a subsystem of the autonomous driving apparatus 110 in a distributed manner.

In some implementations, the processor 113 may be any conventional processor such as a commercially available central processing unit (Central Processing Unit, CPU), or may be another general-purpose processor, a digital signal processor (Digital Signal Processor, DSP), an application-specific integrated circuit (Application Specific Integrated Circuit, ASIC), a field-programmable gate array (Field-Programmable Gate Array, FPGA) or another programmable logic device, a discrete gate or a transistor logic device, a discrete hardware component, or the like. Although FIG. 1f functionally shows a processor, a memory, and other elements in a same physical housing, a person of ordinary skill in the art should understand that the processor, the computer system, or the memory alternatively includes a plurality of processors, computer systems, or memories that may not be stored in a same physical housing. For example, the memory may be a hard disk drive or another storage medium located in a different physical housing. Therefore, references to the processor or the computer system will be understood as including references to a set of processors or computer systems or memories that can be operated in parallel, or references to a set of processors or computer systems or memories that may not be operated in parallel. Different from using a single processor to perform the steps described herein, some components such as a steering component and a deceleration component may include respective processors. The processor performs only computation related to a component-specific function.

In various aspects described herein, the processor 113 may be located far away from the vehicle and perform wireless communication with the vehicle. In other aspects, some of the processes described herein are executed by the processor disposed in the vehicle, and other processes are executed by a remote processor, including steps for performing a single operation.

In some implementations, the data storage apparatus 114 may include the instruction 115 (for example, program logic), and the instruction 115 may be executed by the processor 113 to perform various functions of the autonomous driving apparatus 110, including those functions described above. The data storage apparatus 114 may also include additional instructions, including instructions to send data to, receive data from, interact with, and/or control one or more of the travel system 102, the sensor system 104, the control system 106, and the peripheral device 108.

In addition to the instruction 115, the data storage apparatus 114 may further store data such as a road map, a route message, a location, a direction, and a speed of a vehicle, other vehicle data, and other information. The information may be used by the autonomous driving apparatus 110 and the computer system 112 when the autonomous driving apparatus 110 is operated in an autonomous mode, a semi-autonomous mode, and/or a manual mode.

For example, in this embodiment of this application, the data storage apparatus 114 obtains environment information of the vehicle from the sensor 104 or another component of the autonomous driving apparatus 110. The environment information may be, for example, lane line information, a quantity of lanes, road boundary information, a road driving parameter, a traffic signal, greenbelt information, and whether there is a pedestrian or a vehicle in an environment in which the vehicle is currently located. The data storage apparatus 114 may further store status information of the vehicle and status information of another vehicle that interacts with the vehicle. The status information may include but is not limited to a speed, an acceleration, and a heading angle of the vehicle. For example, the vehicle obtains a distance between another vehicle and the vehicle and a speed of the another vehicle based on functions such as speed measurement and distance measurement of the radar 126. In this case, the processor 113 may obtain the vehicle data from the data storage apparatus 114, and determine, based on the environment information of the vehicle, a driving policy that meets a safety requirement.

In this embodiment of this application, the user interface 116 is configured to provide information for or receive information from the user of the autonomous driving apparatus 110. In some implementations, the user interface 116 may include one or more input/output devices in a set of peripheral devices 108, for example, one or more of the wireless communications system 146, the vehicle-mounted computer 148, the microphone 150, and the loudspeaker 152.

In this embodiment of this application, the computer system 112 may control a function of the autonomous driving apparatus 110 based on inputs received from various subsystems (for example, the travel system 102, the sensor system 104, and the control system) and the user interface 116. For example, the computer system 112 may control the steering system 132 by using an input from the control system 106, to avoid an obstacle detected by the sensor system 104 and the obstacle avoidance system 144. In some implementations, the computer system 112 may be operated to provide control for many aspects of the autonomous driving apparatus 110 and the subsystems thereof.

In some implementations, one or more of the foregoing components may be mounted separately from the autonomous driving apparatus 110 or associated with the autonomous driving apparatus 110. For example, the data storage apparatus 114 may be partially or completely separated from the autonomous driving apparatus 110. The foregoing components may be communicatively coupled together in a wired and/or wireless manner.

In some implementations, the foregoing component is merely an example. In actual application, components in the foregoing modules may be added or deleted based on an actual requirement. FIG. 1f should not be understood as a limitation on this embodiment of this application.

An autonomous vehicle traveling on a road, for example, the autonomous driving apparatus 110, may identify an object in an ambient environment of the autonomous vehicle, to determine whether to adjust a current driving speed of the autonomous driving apparatus 110. Herein, the object may be another vehicle, a traffic control device, or another type of object. In some implementations, each identified object may be considered independently, and a to-be-adjusted speed of the autonomous vehicle is determined based on respective characteristics of the objects, for example, current driving data of the object, an acceleration of the object, or a distance between the object and the vehicle.

In some implementations, the autonomous driving apparatus 110 or a computer device (for example, the computer system 112, the computer vision system 140, or the data storage apparatus 114 shown in FIG. 1f) associated with the autonomous driving apparatus 110 may predict behavior of the identified object based on the characteristics of the identified object and a status (for example, traffic, rain, and ice on a road) of the ambient environment. In some implementations, the identified objects depend on behavior of each other. Therefore, all the identified objects may be considered together to predict behavior of a single identified object. The autonomous driving apparatus 110 can adjust a speed of the autonomous driving apparatus 110 based on the predicted behavior of the identified object. In other words, the autonomous driving apparatus 110 can determine, based on the predicted behavior of the object, a specific stable state to which the vehicle needs to be adjusted (for example, the adjustment operation may include an acceleration operation, a deceleration operation, or a stop operation). In the process, another factor may be considered to determine the speed of the autonomous driving apparatus 110, for example, a lateral location of the autonomous driving apparatus 110 on a driving road, a curvature of the road, and proximity between the autonomous driving apparatus 110 and each of static and dynamic objects.

In addition to providing an instruction for adjusting the speed of the autonomous vehicle, the computer device may further provide an instruction for modifying a steering angle of the vehicle 100, so that the autonomous vehicle follows a given track and/or maintains safe lateral and longitudinal distances from an object (for example, a car in an adjacent lane on a road) near the autonomous vehicle.

In this embodiment of this application, the foregoing autonomous driving apparatus 110 may be a car, a truck, a motorcycle, a bus, a boat, an airplane, a helicopter, a lawn mower, a recreational vehicle, a playground vehicle, a construction device, a trolley, a golf cart, a train, a handcart, and the like. This is not specifically limited in this embodiment of this application.

In some implementations, the autonomous driving apparatus 110 may further include a hardware structure and/or a software module, to implement the foregoing functions in a form of the hardware structure, the software module, or the hardware structure plus the software module. Whether a specific function in the foregoing functions is performed by using a hardware structure, a software module, or a combination of the hardware structure and the software module depends on a specific application and a design constraint of the technical solutions.

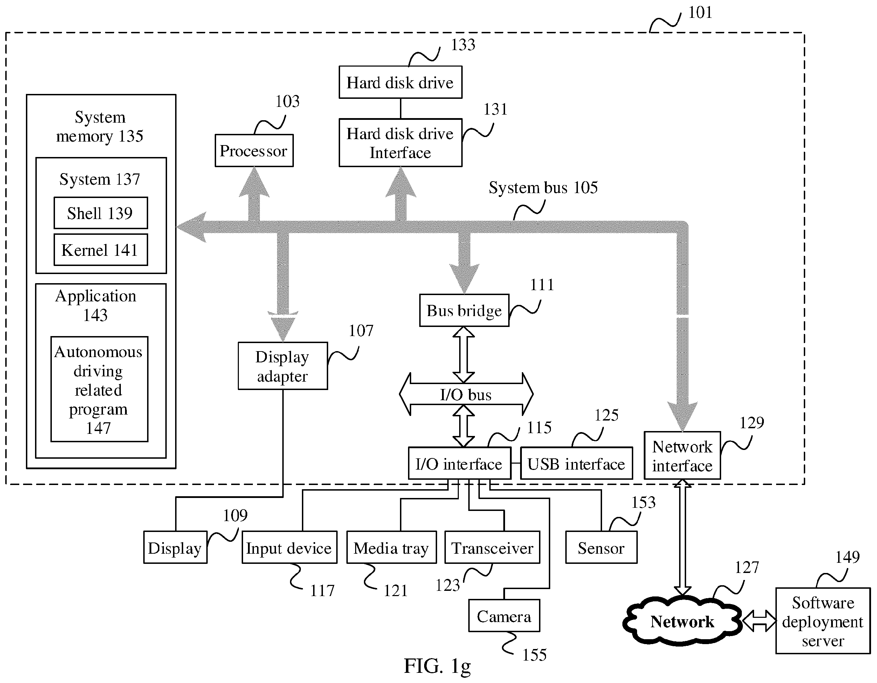

FIG. 1f is a functional block diagram of the autonomous driving apparatus 110. The following describes an autonomous driving system 101 in the autonomous driving apparatus 110. FIG. 1g is a schematic diagram of a structure of an autonomous driving system according to an embodiment of this application. FIG. 1f and FIG. 1g describe the autonomous driving apparatus 110 from different perspectives, for example, the computer system 101 in FIG. 1g is the computer system 112 in FIG. 1f. As shown in FIG. 1g, the computer system 101 includes a processor 103, and the processor 103 is coupled to a system bus 105. The processor 103 may be one or more processors, and each processor may include one or more processor cores. A video adapter (video adapter) 107 may drive a display 109, and the display 109 is coupled to the system bus 105. The system bus 105 is coupled to an input/output (I/O) bus 113 through a bus bridge 111. An I/O interface 115 is coupled to the I/O bus. The I/O interface 115 communicates with a plurality of I/O devices, for example, an input device 117 (such as a keyboard, a mouse, and a touchscreen) and a multimedia tray (media tray) 121 (such as a CD-ROM and a multimedia interface). A transceiver 123 (which may send and/or receive a radio communication signal), a camera 155 (which may capture static and dynamic digital video images), and an external USB interface 125 are provided. Optionally, an interface connected to the I/O interface 115 may be a USB interface.

The processor 103 may be any conventional processor, including a reduced instruction set computing ("RISC") processor, a complex instruction set computing ("CISC") processor, or a combination thereof. Optionally, the processor may be a dedicated apparatus such as an application-specific integrated circuit ("ASIC"). Optionally, the processor 103 may be a neural network processor or a combination of a neural network processor and the foregoing conventional processor.

Optionally, in various embodiments described herein, the computer system 101 may be located away from the autonomous vehicle and may communicate wirelessly with the autonomous vehicle 100. In other aspects, some of the processes described in this specification are performed on a processor disposed inside the autonomous vehicle, and others are performed by a remote processor, including taking actions for performing a single operation.

The computer 101 may communicate with a software deployment server 149 by using a network interface 129. The network interface 129 is a hardware network interface, for example, a network interface card. A network 127 may be an external network, such as the Internet; or may be an internal network, such as the Ethernet or a virtual private network (VPN). Optionally, the network 127 may be a wireless network such as a Wi-Fi network or a cellular network.

A hard disk drive interface is coupled to the system bus 105. A hardware driver interface is connected to a hard disk drive. A system memory 135 is coupled to the system bus 105. Data running in the system memory 135 may include an operating system 137 and an application 143 of the computer 101.

The operating system includes a shell (Shell) 139 and a kernel (kernel) 141. The shell 139 is an interface between a user and the kernel (kernel) of the operating system. The shell is an outermost layer of the operating system. The shell manages interaction between the user and the operating system: waiting for input of the user, interpreting the input of the user for the operating system, and processing various output of the operating system.

The kernel 141 includes components of the operating system that are configured to manage a memory, a file, a peripheral, and system resources. The kernel directly interacts with hardware. The kernel of the operating system usually runs processes, provides communication between the processes, and provides CPU time slice management, interruption, memory management, I/O management, and the like.

The application 141 includes related programs for controlling vehicle's autonomous driving, for example, a program for managing interaction between the autonomous vehicle and an obstacle on a road, a program for controlling a route or a speed of the autonomous vehicle, or a program for controlling interaction between the autonomous vehicle and another autonomous vehicle on the road. The application 141 also exists in a system of the deploying server 149. In an embodiment, when the application 141 needs to be executed, the computer system 101 may download the application 141 from the deploying server 14.

For another example, the application 141 may be an application that controls a vehicle to calculate a driving policy based on sensor data obtained in real time. The sensor data obtained in real time may include environment information, status information of a target vehicle, and status information of a target object that potentially interacts with the target vehicle. Specifically, the environment information is information (for example, greenbelt distribution, a lane, and a traffic light) about an environment in which the target vehicle is currently located, and the status information may include but is not limited to a speed, an acceleration, and a heading angle of the vehicle. For example, the vehicle obtains a distance between another vehicle and the vehicle and a speed of the another vehicle based on functions such as speed measurement and distance measurement of the radar 126. The processor 103 of the computer system 101 may invoke the application 141 to obtain a second driving policy.

In some implementations, an autonomous-driving-policy-layer includes richer information, static layer information of a road ensures that a driving path can be efficiently determined and an obstacle can be avoided during autonomous driving, and dynamic layer information of the road ensures that an unexpected situation can be responded to in a timely manner during autonomous driving. Therefore, in this implementation, a perception defect of a sensor can be overcome, so that it can be learned that accuracy of a first driving policy is generally higher than accuracy of the second driving policy. In this case, the application 141 may further be an application used to control the vehicle to determine a final driving policy according to the first driving policy sent by the cloud server and the second driving policy (herein, the second driving policy is determined by the vehicle by using sensor data obtained in real time). Specifically, when a similarity between the first driving policy and the second driving policy is greater than a specified first threshold, the application 141 determines that the first driving policy or the second driving policy is the final driving policy. When the similarity between the first driving policy and the second driving policy is less than the specified first threshold, the application 141 determines that the first driving policy is the final driving policy.

A sensor 153 is associated with the computer system 101. The sensor 153 is configured to detect an environment around the computer 101. For example, the sensor 153 can detect animals, automobiles, obstacles, pedestrian crosswalks, and the like. Further, the sensor can detect ambient environments of the animals, the automobiles, the obstacles, or the pedestrian crosswalks. For example, the sensor 153 can detect the ambient environment of animals such as other animals in the ambient environment, a weather condition, and brightness of the ambient environment. Optionally, if the computer 101 is located in an autonomous driving automobile, the sensor 153 may be a camera, an infrared sensor, a chemical detector, a microphone, or the like. When being activated, the sensor 153 senses information at preset intervals, and provides the sensed information for the computer system 101 in real time.

Optionally, in various embodiments described in this specification, the computer system 101 may be far away from the autonomous driving apparatus 110, and may perform wireless communication with the autonomous driving apparatus 110. The transceiver 123 may send an autonomous driving task, the sensor data collected by the sensor 153, and other data to the computer system 101, and may further receive control instructions sent by the computer system 101. The autonomous driving apparatus may execute the control instructions received by the transceiver from the computer system 101, and perform a corresponding driving operation. In other aspects, some of the processes described in this specification are executed by a processor disposed in the autonomous vehicle, and other processes are executed by a remote processor, including actions for performing a single operation.

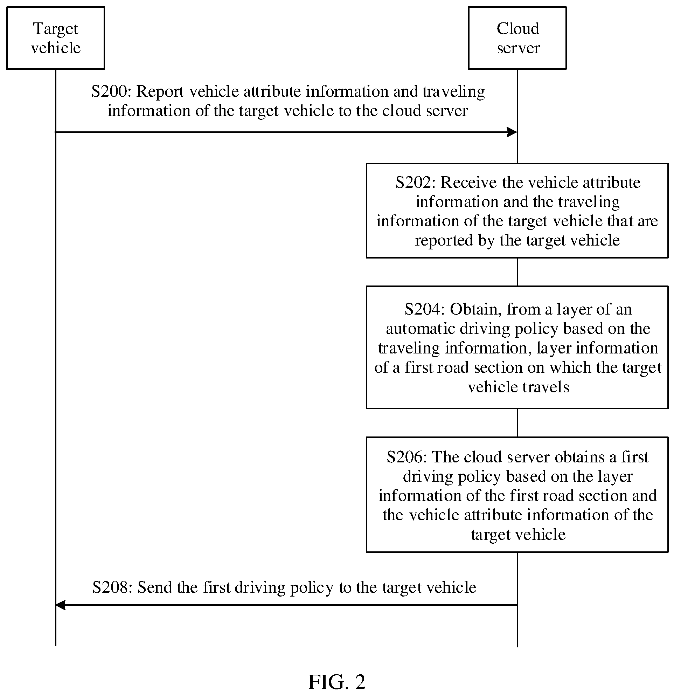

Based on the system architecture shown in FIG. 1e, with reference to a schematic flowchart of an autonomous driving method according to an embodiment of this application in FIG. 2, the following specifically describes how to implement autonomous driving of a vehicle in this embodiment of this application. The method may include but is not limited to the following steps.

Step S200: A target vehicle reports vehicle attribute information and traveling information of the target vehicle to a cloud server.

Step S202: The cloud server receives the vehicle attribute information and the traveling information of the target vehicle that are reported by the target vehicle, where the vehicle attribute information of the target vehicle is used to generate an autonomous driving policy.

In this embodiment of this application, the target vehicle is any one of the plurality of autonomous vehicles in the system architecture shown in FIG. 1e.

In this embodiment of this application, the traveling information is used to indicate traveling of the target vehicle. In an example, the traveling information may include a current location of the target vehicle. For example, the current location is coordinate values (X, Y) represented by using a two-dimensional array, where X is a longitude value, and Y is a latitude value. In an example, the traveling information may include a start location and a destination location. For example, the start location is coordinate values (X1, Y1) represented by using a two-dimensional array, and the destination location is coordinate values (X2, Y2) represented by using a two-dimensional array, where X1 and X2 are longitude values, and Y1 and Y2 are latitude values. In an example, the traveling information may be a planned driving road section from a start location to a destination location, where the planned driving road section is a continuous vector line that has a direction. For example, the start location is A, the destination location is B, and the planned driving road section is a continuous vector line A-C-D-E-B that has a direction. When the traveling information is a current location of the target vehicle, an in-vehicle terminal may send, to the server, traveling information obtained by a position sensor. When the traveling information is a start location and a target location of the target vehicle, or a planned driving road section from a start location to a destination location, the target vehicle may send, to the server, traveling information determined by an in-vehicle navigation (for example, a GPS system, or a BeiDou system, or another positioning system). For example, a user enters the start location and the destination location into the in-vehicle navigation of the target vehicle, and the in-vehicle navigation determines, as traveling information, the start location and the destination location that are entered by the user. For another example, a user selects, from the in-vehicle navigation of the target vehicle, the planned driving road section from the start location to the destination location, and the in-vehicle navigation determines, as traveling information, the planned driving road section selected by the user.

In this embodiment of this application, the vehicle attribute information is used to indicate the autonomous driving policy. For example, the autonomous driving policy may include an autonomous driving policy that the target vehicle can support. Specifically, the vehicle attribute information of the target vehicle may include at least one of an autonomous driving capability of the target vehicle, sensor distribution information of the target vehicle, and a driving status of a driver in the target vehicle. The autonomous driving capability of the target vehicle is a highest autonomous driving level that the target vehicle can support. The sensor distribution information of the target vehicle may include a sensor type, quantity, placement location, and the like. The driving status of the driver may include a fatigue degree of the driver in the vehicle, a driving capability of the driver in the vehicle, and the like.

Next, the sensor distribution information of the target vehicle is described in detail. For example, the target vehicle includes one or more vehicle speed sensors, and the vehicle speed sensors may be distributed inside the target vehicle, to detect a driving speed of the vehicle. The target vehicle includes one or more acceleration sensors, and the acceleration sensors may be distributed inside the target vehicle, to detect an acceleration of the vehicle in a driving process. For example, the acceleration is an acceleration in case of emergency braking. The target vehicle includes one or more video sensors, and the video sensors may be distributed outside the target vehicle, to obtain and monitor image data of an ambient environment of the vehicle. The target vehicle includes one or more radar sensors, and the radar sensors may be distributed outside the entire target vehicle, to obtain and monitor electromagnetic wave data of an ambient environment of the vehicle. Various data such as a distance between a surrounding object and the vehicle and a shape of the surrounding object is detected mainly by transmitting an electromagnetic wave and then receiving the electromagnetic wave reflected by the surrounding object. An example in which a plurality of radar sensors are distributed outside the entire target vehicle is used. A subset of the plurality of radar sensors is coupled to the front of the vehicle, to locate an object in front of the vehicle. One or more other radar sensors may be located at the rear of the vehicle, to locate an object behind the vehicle when the vehicle moves backwards. Another radar sensor may be located on the side of the vehicle to locate an object such as another vehicle that approaches to the vehicle from the side. For example, a light detection and ranging (light detection and ranging, LIDAR) sensor may be mounted on the vehicle 10. For example, the LIDAR sensor is mounted in a rotating structure on the top of the vehicle 10. The LIDAR sensor 120 is rotated to transmit optical signals around the vehicle in a 360° mode, so as to continuously map all objects around the vehicle as the vehicle moves. For example, the target vehicle includes an imaging sensor such as a camera, a video camera, or another similar image collection sensor, and the imaging sensor may be mounted on the vehicle to capture an image as the vehicle moves. A plurality of imaging sensors may be placed on all sides of the vehicle to capture images around the vehicle in a 360° mode. The imaging sensor captures not only visible spectrum images, but also infrared spectrum images. For example, the target vehicle includes a global positioning system (Global Positioning System, GPS) sensor (or a BeiDou system sensor), and the sensor may be located on the vehicle, to provide a controller with geographic coordinates that are related to a location of the vehicle, and generation time of the coordinates. The GPS includes both an antenna for receiving GPS satellite signals and a GPS receiver coupled to the antenna. For example, when an object is observed in an image or by another sensor, the GPS may provide the geographical coordinates and time of the discovery.

The driving status of the driver is used as an example. The fatigue degree of the driver in the target vehicle may be one of a mild fatigue degree, a moderate fatigue degree, a severe fatigue degree, and a good state. In actual application, a face image of the driver may be first obtained, and then the obtained face image of the driver is identified to determine the fatigue degree of the driver. After a classification result of the face image of the driver is identified, different types of driving statuses of the driver may be represented by using an enumerated value. For example, 0 represents the good state, 1 represents the mild fatigue degree, 2 represents the moderate fatigue degree, and 3 represents the severe fatigue degree. The driving capability of the driver of the target vehicle may include one of a high driving capability, a moderate driving capability, and a low driving capability. In actual application, the driving capability of the driver may be represented by using indication information. For example, 00 represents the "high" driving capability of the driver, 01 represents the "moderate" driving capability of the driver, and 02 represents the "low" driving capability of the driver. Alternatively, the driving capability of the driver may be represented by using joint indication information. It should be noted that all the foregoing examples are merely examples, and should not constitute a limitation.

Step S204: The cloud server obtains, from an autonomous-driving-policy-layer based on the traveling information, layer information of a first road section on which the target vehicle travels.

In this embodiment of this application, a road section is a continuous vector line that is between a point A and a point B and that has a direction. For example, the point A is the start location in the traveling information, and the point B is the destination location in the traveling information.

In this embodiment of this application, the cloud server determines at least one driving road section (for example, the road section is the first road section, and the first road section is merely an example for description and should not constitute a limitation) based on the traveling information reported by the target vehicle. Then, the cloud server obtains the layer information of the first road section from the autonomous-driving-policy-layer. Herein, the driving road section may include a road section on which the target vehicle is traveling, or may include a road section on which the target vehicle plans to travel. This is not specifically limited in this embodiment of this application.

In some implementations, the layer information of the first road section may include static layer information of the first road section. The static layer information of the first road section is used to indicate infrastructure information of the first road section. In some implementations, the layer information of the first road section includes static layer information of the first road section and dynamic layer information of the first road section. The static layer information of the first road section is used to indicate infrastructure information of the first road section, and the dynamic layer information of the first road section is used to indicate dynamic traffic information of the first road section.

Specifically, infrastructure information of a road section is an infrastructure that is planned and built by a related department (for example, a transportation department or a government department) to meet a travel requirement of a vehicle. For example, the infrastructure information of the first road section may include at least one of a road (including a road level such as an expressway, a trunk road, and a branch way), a bridge (including a culvert), a tunnel (including a tunnel electromechanical facility such as a monitoring facility, a communication facility, and a lighting facility), and a traffic safety engineering facility (including a sign, a marking, a guard bar, and the like). In actual application, "road" may be represented by using an indicator R, "bridge" may be represented by using an indicator L, "tunnel" may be represented by using an indicator U, and "traffic safety engineering facility" may be represented by using an indicator J. For example, the static layer information of the first road section may include at least one of the following: a lane attribute, digital device information of a road, and greenbelt information. The lane attribute is used to indicate normalization information of a basic road. The digital device information of the road is used to indicate hardware facility information of the road. The greenbelt information is used to indicate a greenbelt location.

For example, the lane attribute may include at least one of the following: lane line information, a quantity of lanes, road boundary information, a road driving parameter, a traffic signal, and an obstacle. The lane line information is used to indicate a lane line location. For example, the lane line information may include a lane width, a lane line angle, and a curvature. The quantity of lanes is used to indicate a lane quantity. For example, four pieces of lane line information such as left left, left, right, and right right may be used to distinguish between three lanes, so that it can be determined that a road XX includes three lanes. The road boundary information is used to indicate a location of a road boundary. The road driving parameter is used to indicate a maximum speed limit allowed in a current road section and a driving speed that can be supported in the current road section. For example, a speed limit is 60 km/h in a road section YY, or a driving speed that can be supported in a road section XY is 100 km/h to 120 km/h, and a driving speed level that can be supported in the road section XY is a driving speed level 3. The traffic signal is used to indicate a proceeding direction of a vehicle (for example, the vehicle stops in case of a red light, the vehicle proceeds in case of a green light, the vehicle turns left, the vehicle turns right, and the vehicle performs a U-turn). The obstacle is used to indicate a driving boundary of a vehicle.

For example, the digital device information of the road may include at least one of the following: a vehicle-to-everything system and a roadside unit. Vehicle-to-everything means vehicle to everything, namely, vehicle to X (V2X), and is a key technology of an intelligent transportation system, so that a vehicle and a vehicle, a vehicle and a base station, a vehicle and a roadside unit, a vehicle and a cloud server, a vehicle and a pedestrian can communicate with each other, and a series of traffic information such as a real-time road condition, road information, and pedestrian information can be obtained. With the V2X system, the autonomous driving apparatus 110 may obtain richer real-time data, and may be configured to analyze traffic information in real time, select a best driving route, and the like. A road side unit (Road Side Unit, RSU) is an apparatus that is installed on the roadside and communicates with an on board unit (On Board Unit, OBU) by using a short-range communications technology (for example, a Cellular-V2X technology). Specifically, the target vehicle may exchange information with a digital device (for example, a roadside unit) on a road and exchange information with the cloud server by using a network, to update environment information of a driving road section in a timely manner, and prevent the target vehicle from traveling in a non-driving area outside an allowed running area, for example, the target vehicle travels on a road in which road traffic control occurs.

Specifically, dynamic traffic information of a road section is traffic information that has a change attribute when a vehicle travels. In this embodiment of this application, the dynamic layer information of the first road section may be information associated with a time point (or a time period), or may be information that is not associated with a time point (or a time period). For example, the dynamic layer information of the first road section may include at least one of the following: weather information, road surface information, a congestion status of the first road section in a time period (for example, a first time period, where the first time period may be specifically a time period of 8:00 a.m. to 9:00 a.m.), a probability that a pedestrian and a non-motor vehicle travel on the first road section in the first time period, and an accident probability that a driving accident occurs on the first road section in the first time period. Herein, the congestion status of the first road section in the first time period may be a historical congestion status, or may be a congestion status that is in a future time period and that is predicted based on the historical congestion status. Similarly, the probability that a pedestrian and a non-motor vehicle travel on the first road section in the first time period may be a historical travel probability, or may be a travel probability that is in a future time period and that is predicted based on the historical travel probability. Similarly, the accident probability that a driving accident occurs on the first road section in the first time period may be a historical accident probability, or may be an accident probability that is in a future time period and that is predicted based on the historical accident probability.

For example, the weather information may include a sunny day, a cloudy day, heavy rain, drizzle, and snow.

For example, the road surface information may include road cutoff, road maintenance, an object dropped on a road, and road flooding. For example, if a road is cut off, it indicates that the vehicle cannot travel on the road section. For example, if a road is maintained, it indicates that the vehicle needs to carefully travel on the road section or bypass the road section. In this case, for the purpose of safe driving, an autonomous driving policy with a high automation degree generally needs to be switched to an autonomous driving policy with a low automation degree. For example, a fully autonomous driving policy is switched to a partially autonomous driving policy. For example, if an object is dropped on a road, whether a size of the dropped object is greater than a threshold is further obtained. If the size of the dropped object is less than the threshold, it indicates that the dropped object has little impact on the autonomous driving policy, or the impact may be ignored. For example, if the dropped object is a piece of paper, the object dropped on the road has little impact on driving of the autonomous driving policy. If the size of the dropped object is greater than the threshold, for example, if the dropped object is a stone, the object dropped on the road has a large impact on driving of the autonomous vehicle. In this case, for the purpose of safe driving, an autonomous driving policy with a high automation degree generally needs to be switched to an autonomous driving policy with a low automation degree.

In this embodiment of this application, the foregoing congestion status of the first road section in a time period (for example, a first time period, where the first time period may be specifically a time period of 8:00 a.m. to 9:00 a.m.), the foregoing probability that a pedestrian and a non-motor vehicle travel on the first road section in the first time period, and the foregoing accident probability that a driving accident occurs on the first road section in the first time period are all statistical values of the first road section. The statistical value (also referred to as a sample value) is a comprehensive description of a variable in a sample, or a comprehensive quantitative representation of a feature of all elements in a sample. The statistical value is calculated from the sample, and is an estimate of a corresponding parameter value. In some implementations, statistics about on vehicles on the first road section may be collected through time division, for example, statistics about a quantity of vehicles traveling on the first road section in a time period are collected, and statistics about distribution of autonomous driving policies of vehicles traveling on the first road section in a time period are collected. Alternatively, statistics about traffic participants other than vehicles on the first road section may be collected through time division, for example, statistics about a quantity of pedestrians and non-motor vehicles that travel on the first road section in a time period are collected, to obtain the statistical value of the first road section.

In this embodiment of this application, for a definition of a congestion status of a road, it may be determined whether a traffic speed of a road section is less than a specified threshold. For example, the threshold may be 10 km/h, and if the traffic speed of the road section is less than 10 km/h, it indicates that congestion occurs on the road. For another example, if the threshold is 20 vehicles per lane, it indicates that congestion occurs on the road.

Step S206: The cloud server obtains a first driving policy based on the layer information of the first road section and the vehicle attribute information of the target vehicle.

In some implementations, the implementation step of obtaining a first driving policy based on the layer information of the first road section and the vehicle attribute information of the target vehicle may include: obtaining a first safe passage probability based on the layer information of the first road section and the vehicle attribute information of the target vehicle, and then obtaining, based on a correspondence between a driving policy and a safe passage probability, the first driving policy corresponding to the first safe passage probability. Specifically, the cloud server stores the correspondence between a driving policy and a safe passage probability. For example, the cloud server sets, to a driving policy 1, a driving policy corresponding to a safe passage probability 70%; the cloud server sets, to a driving policy 2, a driving policy corresponding to a safe passage probability 75%; the cloud server sets, to a driving policy 3, a driving policy corresponding to a safe passage probability 80%; the cloud server sets, to a driving policy 4, a driving policy corresponding to a safe passage probability 85%; the cloud server sets, to a driving policy 5, a driving policy corresponding to a safe passage probability 90%; and the cloud server sets, to a driving policy 6, a driving policy corresponding to a safe passage probability 95%. Therefore, if the first safe passage probability determined by the cloud server based on the layer information of the first road section and the vehicle attribute information of the target vehicle is 90%, the cloud server finds, based on the preset correspondence between a driving policy and a safe passage probability, that the driving policy corresponding to the first safe passage probability 90% is the driving policy 5.

In some implementations, the correspondence that is between a driving policy and a safe passage probability and that is stored on the cloud server includes a correspondence between an interval of a safe passage probability and a driving policy. In this case, the obtaining, based on a correspondence between a driving policy and a safe passage probability, the driving policy corresponding to the first safe passage probability is specifically: searching for, based on the correspondence between a driving policy and an interval of a safe passage probability, the driving policy corresponding to the first safe passage probability. Specifically, the cloud server groups safe passage probabilities into different probability intervals, and each probability interval corresponds to one driving policy. For example, the cloud server sets, to a driving policy 1, a driving policy corresponding to a probability interval in which a safe passage probability is greater than or equal to 70% and less than 75%.

In this embodiment of this application, the implementation process of obtaining a first safe passage probability based on the layer information of the first road section and the vehicle attribute information of the target vehicle may include: calculating the first safe passage probability by using a first model. For example, the first model may be a formula, may be a function model, or may be a trained neural network model. It should be understood that there may be a plurality of manners for calculating the safe passage probability herein. In an implementation, calculation of the first safe passage probability may meet a formula or a function model.

In a possible implementation, the first model includes at least one information item and a weight parameter corresponding to the at least one information item. Herein, the at least one information item is an information item obtained through extraction based on the layer information of the first road section and the vehicle attribute information of the target vehicle, and the weight parameter is used to indicate importance of an information item when the information item is used to determine the first safe passage probability. Specifically, the first model may be represented as follows:

$$P = A_1 * \omega_1 + A_n * \omega_n + \ldots + A_n * \omega_n \qquad (1)$$

where A1 represents the first information item, $\omega_1$ represents a weight parameter corresponding to the first information item, A2 represents the second information item, $\omega_2$ represents a weight parameter corresponding to the second information item, An represents an $n^{th}$ information item, and $\omega_n$ represents a weight parameter corresponding to the $n^{th}$ information item. It should be noted that a larger weight parameter corresponding to an information item indicates greater importance of the information item when the information item is used to determine the safe passage probability.

In a possible implementation, the first model is associated with sample data. In an implementation, the first model is associated with at least one piece of sample data. In actual application, the first model may be a neural network model. For example, the neural network model may be a deep learning neural network model (Deep Neural Networks, DNN), or may be a recurrent neural network model (Recurrent Neural Networks, RNN). An example in which the first model is a recurrent neural network model RNN is used. A hidden layer of the RNN includes a plurality of hidden layer nodes, and each hidden layer node corresponds to one information item. Each hidden layer node has a weighting parameter. It should be noted that a key to training the recurrent neural network model RNN is to determine a training sample. Considering that adjacent road sections generally have a similar traffic characteristic, sample data of the recurrent neural network model RNN includes at least one information item extracted from layer information of a second road section and the vehicle attribute information of the target vehicle. The second road section is a road section adjacent to the first road section, and the second road section is an entrance of the first road section. In this implementation, because adjacent road sections have a same or similar traffic characteristic, the trained first model is obtained based on the layer information of the second road section and the vehicle attribute information of the target vehicle, so that accuracy of calculating the first safe passage probability by using the first model can be improved.

In this embodiment of this application, the trained recurrent neural network model RNN may be obtained by using a plurality of pieces of sample data of the second road section. The trained recurrent neural network model RNN may be used to represent a correspondence among the layer information of the second road section, the vehicle attribute information of the target vehicle, and a safe driving probability. When a safe passage probability of another road section (for example, the first road section) on which the target vehicle travels is determined, the layer information of the first road section and the vehicle attribute information of the target vehicle may be input into the trained recurrent neural network model to obtain the safe passage probability of the first road section.

It should be noted that in the foregoing implementation process of obtaining a first driving policy based on the layer information of the first road section and the vehicle attribute information of the target vehicle, in some implementations, when the layer information of the first road section includes the static layer information of the first road section, the implementation step of obtaining a first driving policy based on the layer information of the first road section and the vehicle attribute information of the target vehicle may include: obtaining the first driving policy based on the static layer information of the first road section and the vehicle attribute information of the target vehicle. In this case, when the safe passage probability is calculated by using the first model (for example, the first model is a formula), an information item is extracted from the static layer information of the first road section and the vehicle attribute information of the target vehicle, and then a weight parameter corresponding to each information item is obtained, to calculate the safe passage probability. When the safe passage probability is calculated by using the first model (for example, the first model is a trained neural network model), the static layer information of the first road section and the vehicle attribute information of the target vehicle are input into the first model, to obtain the safe passage probability of the first road section on which the target vehicle travels. In some implementations, when the layer information of the first road section includes the static layer information of the first road section and the dynamic layer information of the first road section, the implementation step of obtaining a first driving policy based on the layer information of the first road section and the vehicle attribute information of the target vehicle may include: obtaining the first driving policy based on the static layer information of the first road section, the dynamic layer information of the first road section, and the vehicle attribute information of the target vehicle. In this case, when the safe passage probability is calculated by using the first model (for example, the first model is a formula), an information item is extracted from the static layer information of the first road section and the dynamic layer information of the first road section, and then a weight parameter corresponding to each information item is obtained, to calculate the safe passage probability. When the safe passage probability is calculated by using the first model (for example, the first model is a trained neural network model), the static layer information of the first road section, the dynamic layer information of the second road section, and the vehicle attribute information of the target vehicle are input into the first model, to obtain the safe passage probability of the first road section on which the target vehicle travels.

Step S208: The cloud server sends the first driving policy to the target vehicle.

In this embodiment of this application, after the cloud server obtains the first safe driving policy based on the layer information of the first road section and the vehicle attribute information of the target vehicle, the cloud server delivers the first safe driving policy to the autonomous driving apparatus of the target vehicle, so that the target vehicle performs autonomous driving according to the first driving policy.

During implementation of the autonomous driving method described in this embodiment of this application, the cloud server may obtain, from the autonomous-driving-policy-layer by using the traveling information reported by the target vehicle, the layer information of the first road section on which the target vehicle travels, and then obtain, based on the layer information of the first road section and the vehicle attribute information, a driving policy that meets a safety requirement, so that the target vehicle can perform autonomous driving according to the driving policy determined by the cloud server. The autonomous-driving-policy-layer includes richer information, static layer information of a road ensures that a driving path can be efficiently determined and an obstacle can be avoided during autonomous driving, and dynamic layer information of the road ensures that an unexpected situation can be responded to in a timely manner during autonomous driving. Therefore, in this implementation, a perception defect (for example, the perception defect of a sensor is as follows: data obtained by the sensor is limited, a detection range of the sensor is limited, and detection of the sensor is vulnerable to an environment) of the sensor can be overcome. Therefore, accuracy of determining a driving policy that meets a safety requirement can be improved, and a risk of autonomous driving can be reduced.

In some implementations, when the target vehicle is traveling on the first road section, the target vehicle may report, to the cloud server, a second driving policy used to travel on the first road section. The second driving policy is determined by the target vehicle by using sensor data obtained in real time by the sensor 104 shown in FIG. 1f. In this case, the cloud server may determine whether a similarity between the first driving policy and the second driving policy meets a specified preset condition. When the similarity between the first driving policy and the second driving policy meets the specified preset condition, the cloud server sends, to the target vehicle, prompt information for switching the second driving policy to the first driving policy.

In this embodiment of this application, a form of the prompt information may be another form such as voice, light, or picture and text display. For example, the form of the prompt information is voice, and the prompt information may be: "Safety of the second driving policy for current driving is low. Switch the second driving policy to the first driving policy." The voice may be strong and stern. An example in which the form of the prompt information is light is used, and the prompt information may be bright light that flickers. An example in which the form of the prompt information is a picture and text is used, and the picture and the text may be "high-risk driving".

For example, that the foregoing similarity between the first driving policy and the second driving policy meets the preset condition may be that the similarity between the first driving policy and the second driving policy is less than a specified first threshold (for example, the first threshold may be 0.8). Alternatively, that the similarity between the first driving policy and the second driving policy meets the preset condition may be that the similarity between the first driving policy and the second driving policy meets a function relationship and the like.

In this implementation, the autonomous-driving-policy-layer includes rich information, and the perception defect of the sensor can be overcome. Therefore, this also means that the first driving policy determined by the cloud server based on the autonomous-driving-policy-layer is safer than the second driving policy determined by the target vehicle based on the sensor data obtained in real time. For the purpose of safe driving, when determining that the similarity between the first driving policy and the second driving policy is less than a specified threshold, the cloud server sends, to the target vehicle, the prompt information for switching the second driving policy to the first driving policy, so that the target vehicle performs autonomous driving by using the first driving policy with higher safety, and a risk of autonomous driving can be reduced.

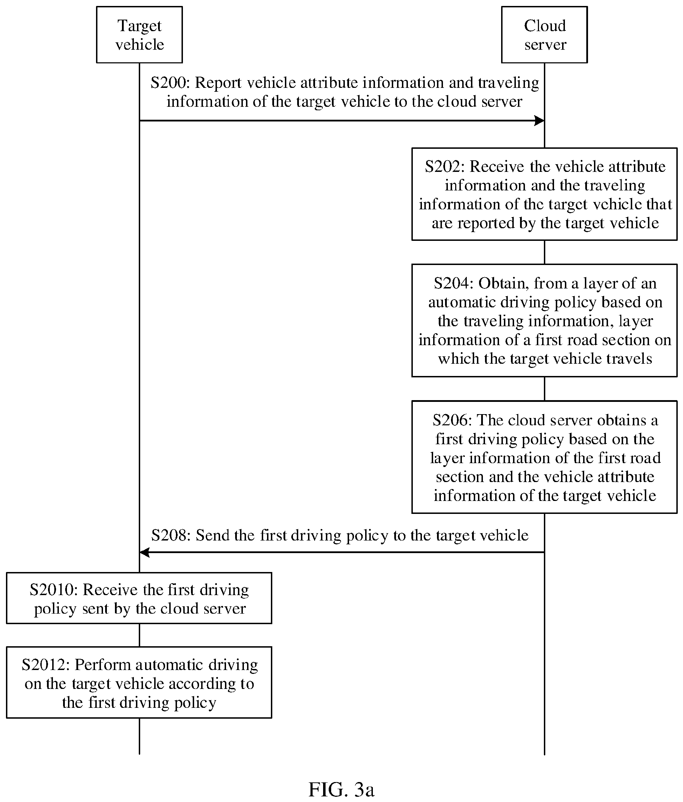

The following is described in the method shown in FIG. 2: The cloud server may obtain, from the autonomous-driving-policy-layer by using the traveling information reported by the target vehicle, the layer information of the first road section on which the target vehicle travels, and then obtain, based on the layer information of the first road section and the vehicle attribute information, a driving policy that meets a safety requirement. The following describes an autonomous driving method applied to an in-vehicle terminal, and specifically describes how the in-vehicle terminal performs autonomous driving according to the first driving policy. FIG. 3a shows an autonomous driving method according to an embodiment of this application. Specifically, the method is performed after the foregoing step S208. As shown in FIG. 3a, the method may include the following steps:

Step S2010: A target vehicle receives a first driving policy sent by a cloud server.
Step S2012: The target vehicle performs autonomous driving on the target vehicle according to the first driving policy.

In some implementations, the target vehicle may determine, by using sensor data obtained by the sensor shown in FIG. 1f, a second driving policy used by the target vehicle to travel on a first road section. In this case, the implementation step of performing autonomous driving on the target vehicle according to the first driving policy may include: performing autonomous driving on the target vehicle according to the first driving policy and the second driving policy.

The following specifically describes a method in which the target vehicle determines the second driving policy based on the obtained sensor data. For example, the sensor data is used to indicate information about a current driving environment of the target vehicle.

In this embodiment of this application, an example in which the sensor data is image data that is in a driving environment and that is obtained by a camera is used. Specifically, the image data may be image data of a static object (for example, a greenbelt), or may be image data of a dynamic object (for example, a vehicle ahead).

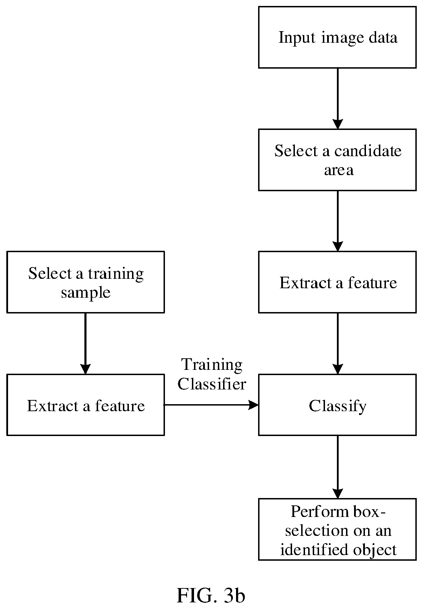

In a process of identifying the static object or the dynamic object, first, a type of the object is detected and identified. Specifically, FIG. 3b shows an implementation process of detecting and identifying an object. Image data is input into a feature extraction model, and the feature extraction model selects a candidate area from an image, and extracts a feature of the candidate area. Then, the feature extraction model outputs the extracted feature, and inputs the feature to a classifier. The classifier performs classification identification on the extracted feature, and the classifier outputs a probability of identifying the static object or the dynamic object as an $i^{th}$ type of object. Further, the identified object may be box-selected for representation. FIG. 3b further shows a classifier obtaining manner. Specifically, a training sample is selected, and an operation such as feature extraction is performed on the training sample, so that a training process of the training sample can be completed, to obtain a classifier.

The training sample includes a positive sample and a negative sample. The positive sample is a sample related to a detected and identified object, and the negative sample is a sample that is not related to or is less related to the detected and identified object. For example, in the object detection and identification process shown in FIG. 3b, whether an object is a vehicle needs to be detected, that is, the detected and identified object is a vehicle. In this case, the positive sample is an image of the vehicle, and the negative sample is an image of an object other than the vehicle, for example, the negative sample is an image of a lane line or an image of a greenbelt.

In some implementations, the foregoing feature extraction model may be a convolutional neural network model (Convolutional Neural Network, CNN). Certainly, the feature extraction model may be another learning model that has an image data feature function. The classifier may be a support vector machine (Support Vector Machine, SVM), or another type of classifier is used. Types of the classifier and the feature extraction model are not limited in this embodiment of this application.

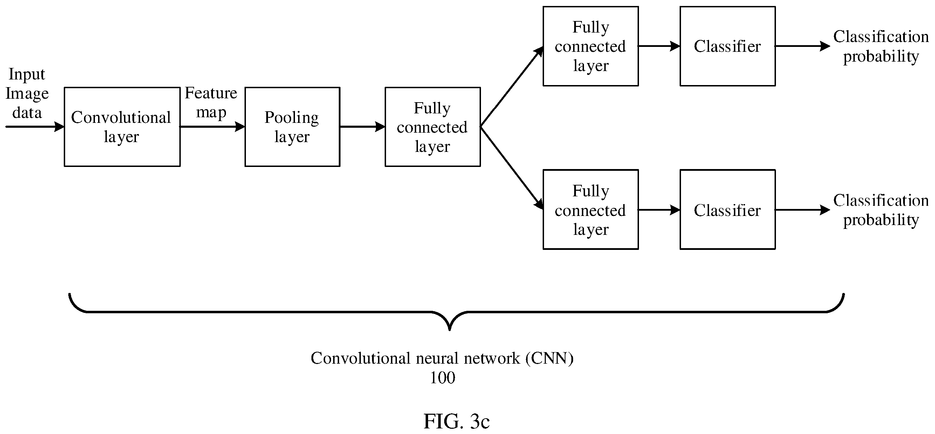

An example in which a deep learning algorithm is used to detect and identify an object and the feature extraction model is a neural network model is used. FIG. 3c is a schematic diagram of a structure of a convolutional neural network model according to an embodiment of this application. The convolutional neural network model includes one convolutional layer, one pooling layer, and three fully connected layers. As shown in FIG. 3c, the object detection and identification process is specifically as follows: An image is input into the convolutional neural network model, and a feature map of a candidate area of the image data is obtained by using the convolutional layer of the model, where the feature map is used to indicate a feature extracted from the candidate area. Then, the pooling layer performs a pooling operation based on the feature map output by the convolution layer, reserves a main feature of the candidate area, and reduces a quantity of features that need to be calculated, to reduce a calculation amount of the convolution neural network model. Next, a feature vector output by the pooling layer is input into the fully connected layer, and the fully connected layer combines features of all candidate areas to obtain a feature of the entire image, and outputs the image feature to a classifier. The classifier may output a classification probability of an object in the image. For example, the classifier outputs a probability 98% that the object in the image is a vehicle. In some implementations, after the classification probability of the object is obtained, the identified object is box-selected, and a box-selected location is finely trimmed by using a regressor.

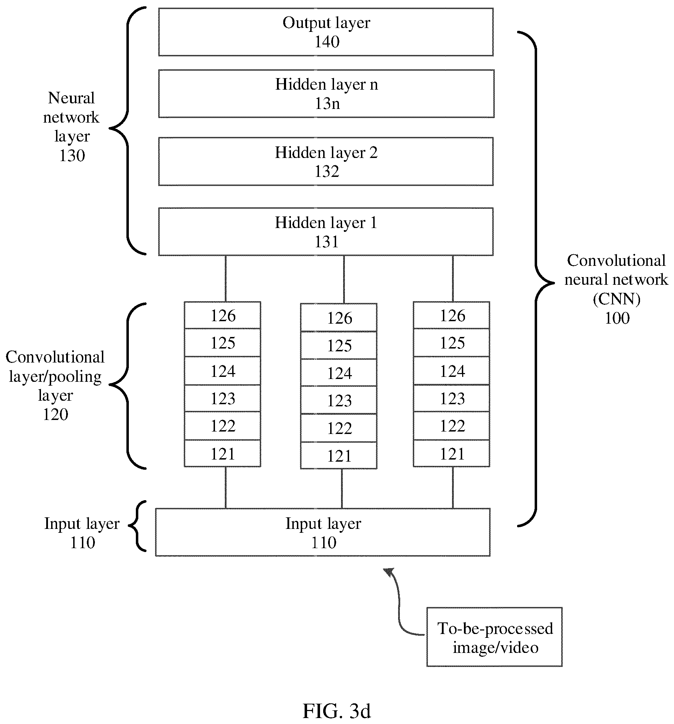

It should be noted that, in the convolutional neural network model, there may be a plurality of convolutional layers, a plurality of pooling layers, and a plurality of fully connected layers. For example, a plurality of convolutional layers/pooling layers shown in FIG. 3d input, in parallel, respectively extracted features into a neural network layer 130 for processing.

In this case, the target vehicle may obtain the second driving policy based on obtained image data of one or more static objects and obtained image data of one or more dynamic objects in the current driving environment.

In this embodiment of this application, for the implementation process of performing autonomous driving on the target vehicle according to the first driving policy and the second driving policy, refer to the following two cases:
Case 1: When determining that a similarity between the first driving policy and the second driving policy is greater than a first threshold, the target vehicle performs autonomous driving on the target vehicle according to the first driving policy, or performs autonomous driving on the target vehicle according to the second driving policy.

In this embodiment of this application, the similarity is also referred to as a similarity metric, namely, a metric for comprehensively evaluating a degree to which two things are similar. It may be understood that, if the two things are more similar, a similarity between the two things is larger. For example, the target vehicle determines, by using the sensor data obtained in real time, that an autonomous driving policy of the first road section on which the target vehicle travels is a fully autonomous driving L5, and the cloud server determines, based on an autonomous-driving-policy-layer, that the autonomous driving policy of the first road section on which the target vehicle travels is a highly autonomous driving policy. It may be learned from Table 1 that the fully autonomous driving policy L5 means that the vehicle completes all driving operations, and the human driver does not need to keep the driver's attention. The highly autonomous driving policy L4 means that the vehicle completes all driving operations, and the human driver does not need to keep the driver's attention, but road and environment conditions are limited. A difference between the two driving policies is as follows: The road and environment conditions are limited in the highly autonomous driving policy L4, and the road and environment conditions are not limited in the fully autonomous driving policy L5. It may be understood that a similarity between the highly autonomous driving policy L4 and the fully autonomous driving policy L5 is very high. For example, it is determined, by using a similarity calculation formula (for example, the Euclidean distance formula), that the similarity between the two driving policies is 0.85, and the similarity is greater than the specified first threshold (for example, the first threshold is 0.8). In this case, the target vehicle may perform autonomous driving on the target vehicle according to the first driving policy, or the target vehicle performs autonomous driving on the target vehicle according to the second driving policy.

It should be noted that, in some implementations, when determining that the similarity between the first driving policy and the second driving policy is greater than or equal to the first threshold, the target vehicle may perform autonomous driving on the target vehicle according to the first driving policy, or the target vehicle may perform autonomous driving on the target vehicle according to the second driving policy. This indicates that safety of the vehicle can be ensured when the target vehicle performs autonomous driving by using the first driving policy or the second driving policy.

Case 2: When determining that the similarity between the first driving policy and the second driving policy is less than the first threshold, the target vehicle performs autonomous driving on the target vehicle according to the first driving policy.

In this embodiment of this application, a sensor has a perception defect, for example, the perception defect is as follows: data obtained by the sensor is limited, a detection range of the sensor is limited, and detection of the sensor is vulnerable to an environment. Therefore, the perception defect easily causes less accuracy of the obtained sensor data, and accuracy of a driving policy determined based on the sensor data is easily reduced. The autonomous-driving-policy-layer may be considered as an extension of a conventional hardware sensor (for example, a radar, a laser rangefinder, or a camera), includes richer data, and is not affected by an environment, an obstacle, or interference. Static layer information of a road ensures that a driving path can be efficiently determined and an obstacle can be avoided during autonomous driving, and dynamic layer information of the road ensures that an unexpected situation can be responded to in a timely manner during autonomous driving. Therefore, it may be learned that the first driving policy determined based on the autonomous-driving-policy-layer is safer than the second driving policy determined by the target vehicle by using the sensor data obtained in real time. Based on this, when determining that the similarity between the first driving policy and the second driving policy is less than the first threshold, for the purpose of safe driving, the autonomous driving apparatus performs autonomous driving on the target vehicle according to the first driving policy, to avoid driving risk.

It should be noted that, in some implementations, when determining that the similarity between the first driving policy and the second driving policy is less than or equal to the first threshold, the target vehicle performs autonomous driving on the target vehicle according to the first driving policy, that is, to avoid an accidental risk of the vehicle, the target vehicle selects the first driving policy with higher safety to perform autonomous driving.

It may be understood that, in this embodiment of this application, when "the similarity between the first driving policy and the second driving policy is equal to the first threshold", it may be considered that the case meets the foregoing Case 1, or it may be considered that the case meets the foregoing Case 2. This is not specifically limited in this embodiment of this application.

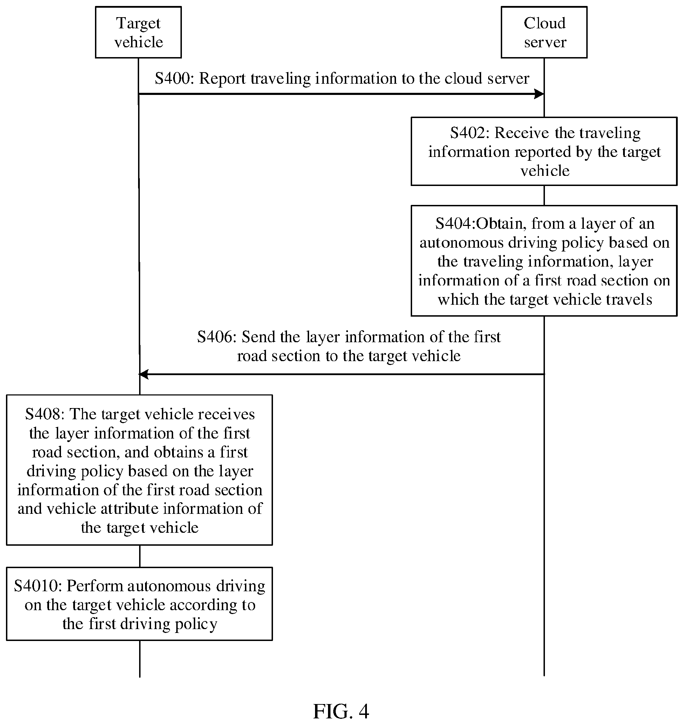

The following is described in the method shown in FIG. 2: The cloud server may obtain, from the autonomous-driving-policy-layer by using the traveling information reported by the target vehicle, the layer information of the first road section on which the target vehicle travels, and then obtain, based on the layer information of the first road section and the vehicle attribute information, a driving policy that meets a safety requirement. The following describes an autonomous driving method applied to an in-vehicle terminal (which may also be referred to as an autonomous driving apparatus), and specifically describes how the in-vehicle terminal obtains the driving policy based on the layer that is of the autonomous driving policy and that is sent by the cloud server. FIG. 4 shows another autonomous driving method according to an embodiment of this application. As shown in FIG. 4, the method may include the following steps.

Step S400: A target vehicle reports traveling information to a cloud server.

In this embodiment of this application, for specific descriptions of the traveling information and a specific implementation in which the target vehicle reports the traveling information to the cloud server, refer to the related descriptions in the foregoing method embodiment in FIG. 2. Details are not described herein again.

Step S402: The cloud server receives the traveling information reported by the target vehicle.

Step S404: The cloud server obtains, from an autonomous-driving-policy-layer based on the traveling information, layer information of a first road section on which the target vehicle travels.

In some implementations, the layer information of the first road section may include static layer information of the first road section. The static layer information of the first road section is used to indicate infrastructure information of the first road section. In some implementations, the layer information of the first road section includes static layer information of the first road section and dynamic layer information of the first road section. Specifically, the static layer information of the first road section is used to indicate infrastructure information of the first road section, and the dynamic layer information of the first road section is used to indicate dynamic traffic information of the first road section.

Step S406: The cloud server sends the layer information of the first road section to the target vehicle.

Step S408: The target vehicle receives the layer information of the first road section, and obtains a first driving policy based on the layer information of the first road section and vehicle attribute information of the target vehicle.

In this embodiment of this application, for a specific implementation in which the target vehicle obtains the first driving policy based on the layer information of the first road section and the vehicle attribute information of the target vehicle, refer to the related descriptions of the foregoing step S206. Details are not described herein again.

Step S4010: The target vehicle performs autonomous driving on the target vehicle according to the first driving policy.

In some implementations, the target vehicle may report, to the cloud server, the first driving policy obtained based on the layer information of the first road section and the vehicle attribute information of the target vehicle, so that the cloud server stores the first driving policy, and updates corresponding layer information in the autonomous-driving-policy-layer of the first road section. In actual application, the cloud server may send the first driving policy (for example, a recommended operation mode) to another vehicle that is in the area and that is the same as or similar to the target vehicle, to assist the another vehicle in driving.

During implementation of this embodiment of this application, the cloud server may obtain, from the autonomous-driving-policy-layer by using the traveling information reported by the target vehicle, the layer information of the first road section on which the target vehicle travels, and then send the layer information of the first road section to the target vehicle, so that the target vehicle can obtain, based on the layer information of the first road section and the vehicle attribute information, a driving policy that meets a safety requirement, to perform autonomous driving according to the determined driving policy. The autonomous-driving-policy-layer includes richer information, static layer information of a road ensures that a driving path can be efficiently determined and an obstacle can be avoided during autonomous driving, and dynamic layer information of the road ensures that an unexpected situation can be responded to in a timely manner during autonomous driving. Therefore, in this implementation, a perception defect (for example, the perception defect of a sensor is as follows: data obtained by the sensor is limited, a detection range of the sensor is limited, and detection of the sensor is vulnerable to an environment) of the sensor can be overcome. Therefore, accuracy of determining a driving policy that meets a safety requirement can be improved, and a risk of autonomous driving can be reduced.

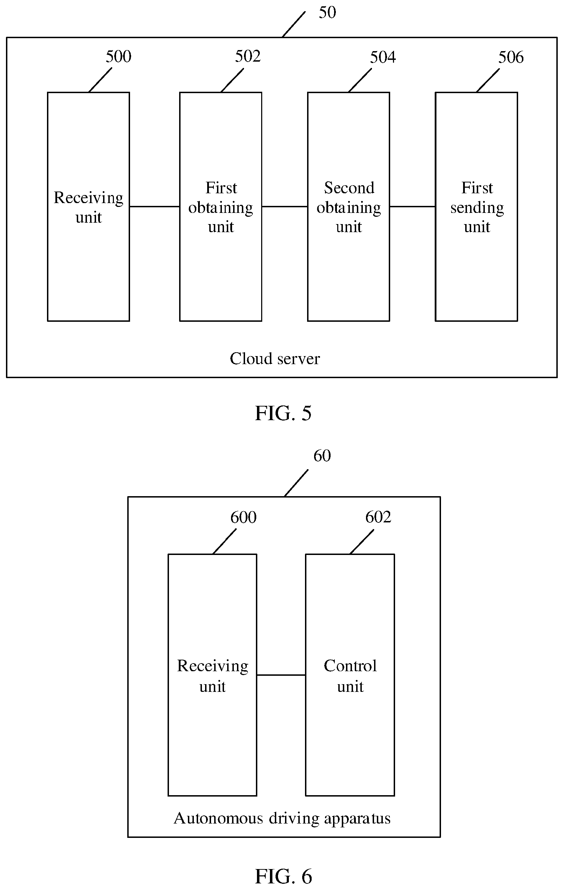

To better implement the foregoing solutions in the embodiments of this application, the embodiments of this application provide a cloud server. The cloud server is configured to execute the unit of the method according to any one of the implementations of the first aspect, to determine a driving policy by using an autonomous-driving-policy-layer. Specifically, FIG. 5 is a schematic block diagram of a cloud server 500 according to an embodiment of this application. The cloud server 50 in this embodiment of this application may include:

a receiving unit 500, configured to receive vehicle attribute information and traveling information of a target vehicle that are reported by the target vehicle, where the vehicle attribute information of the target vehicle is used to generate an autonomous driving policy;

a first obtaining unit 502, configured to obtain, from an autonomous-driving-policy-layer based on the traveling information, layer information of a first road section on which the target vehicle travels;

a second obtaining unit 504, configured to obtain a first driving policy based on the layer information of the first road section and the vehicle attribute information of the target vehicle; and

a first sending unit 506, configured to send the first driving policy to the target vehicle.

In a possible implementation, the cloud server stores a correspondence between a driving policy and a safe passage probability, and the second obtaining unit 504 may include a safe passage probability obtaining unit and a driving policy obtaining unit.

The safe passage probability obtaining unit is configured to obtain a first safe passage probability based on the layer information of the first road section and the vehicle attribute information of the target vehicle.

The driving policy obtaining unit is configured to obtain, based on the correspondence between a driving policy and a safe passage probability, the first driving policy corresponding to the first safe passage probability.

In a possible implementation, the safe passage probability obtaining unit is specifically configured to: calculate the first safe passage probability by using a first model, where the first model includes at least one information item and a weight parameter corresponding to the at least one information item, the at least one information item is an information item obtained through extraction based on the layer information of the first road section and the vehicle attribute information of the target vehicle, and the weight parameter is used to indicate importance of an information item when the information item is used to determine the first safe passage probability.

In a possible implementation, the first model is a model obtained through training based on at least one piece of sample data, the sample data includes at least one information item extracted from layer information of a second road section and the vehicle attribute information of the target vehicle, the second road section is a road section adjacent to the first road section, and an exit of the second road section is an entrance of the first road section.

In a possible implementation, the layer information of the first road section includes at least one of static layer information of the first road section and dynamic layer information of the first road section, the static layer information of the first road section is used to indicate infrastructure information of the first road section, and the dynamic layer information of the first road section is used to indicate dynamic traffic information of the first road section.

In a possible implementation, the static layer information of the first road section includes at least one of a lane attribute, digital device information, and greenbelt information, and the dynamic layer information of the first road section includes at least one of weather information, road surface information, a congestion status of the first road section in a first time period, a probability that a pedestrian and a non-motor vehicle travel on the first road section in the first time period, and an accident probability that a driving accident occurs on the first road section in the first time period.

In a possible implementation, the first road section is a road section on which the target vehicle is traveling, and the cloud server 50 further includes:

a third obtaining unit 508, configured to obtain a second driving policy used by the target vehicle to travel on the first road section, where the second driving policy is determined by the target vehicle based on sensor data obtained in real time; and

a second sending unit 5010, configured to: when a similarity between the first driving policy and the second driving policy is less than a first threshold, send, to the target vehicle, prompt information for switching the second driving policy to the first driving policy.

In a possible implementation, the vehicle attribute information of the target vehicle includes at least one of an autonomous driving capability of the target vehicle, sensor distribution information of the target vehicle, and a driving status of a driver in the target vehicle.

It should be noted that, for the cloud server described in this embodiment of this application, refer to the related descriptions of the autonomous driving method in the foregoing method embodiments in FIG. 3a and FIG. 4. Details are not described herein again.

To better implement the foregoing solutions in the embodiments of this application, the embodiments of this application provide an autonomous driving apparatus. The autonomous driving apparatus is configured to execute the unit of the method according to any one of the implementations of the second aspect, to perform autonomous driving according to a first driving policy determined by a cloud server. Specifically, FIG. 6 is a schematic block diagram of an autonomous driving apparatus 60 according to an embodiment of this application. The autonomous driving apparatus 60 in this embodiment of this application may include:

a receiving unit 600, configured to receive a first driving policy sent by a cloud server, where the first driving policy is the first driving policy obtained in the method according to any one of the implementations of the first aspect; and

a control unit 602, configured to perform autonomous driving on a target vehicle according to the first driving policy.

In a possible implementation, the apparatus 60 may further include:
a second driving policy obtaining unit 604, configured to obtain, by using sensor data, a second driving policy used by the target vehicle to travel on a first road section.

The control unit 602 is specifically configured to:
perform autonomous driving on the target vehicle according to the first driving policy and the second driving policy.

In a possible implementation, the control unit 602 is specifically configured to:

when determining that a similarity between the first driving policy and the second driving policy is greater than a first threshold, perform autonomous driving on the target vehicle according to the first driving policy, or perform autonomous driving on the target vehicle according to the second driving policy; or

when determining that a similarity between the first driving policy and the second driving policy is less than the first threshold, perform autonomous driving on the target vehicle according to the first driving policy.

It should be noted that, for the autonomous driving apparatus described in this embodiment of this application, refer to the related descriptions of the autonomous driving method in the foregoing method embodiment in FIG. 4. Details are not described herein again.

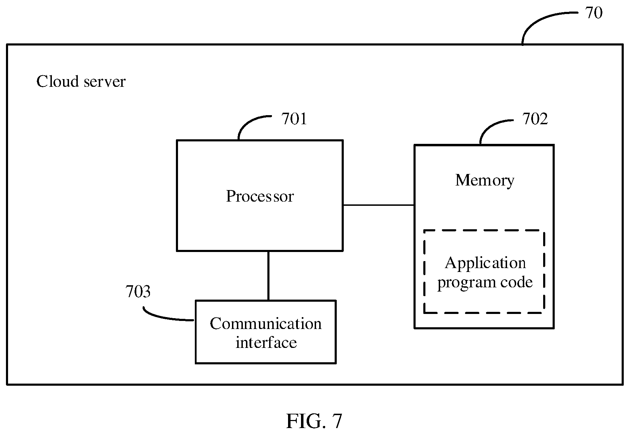

FIG. 7 is a schematic diagram of a structure of a cloud server according to an embodiment of this application. A cloud server 70 includes at least one processor 701, at least one memory 702, and at least one communication interface 703. In addition, the cloud server may further include a general-purpose component such as an antenna. Details are not described herein.

The processor 701 may be a general-purpose central processing unit (CPU), a microprocessor, an application-specific integrated circuit (application-specific integrated circuit, ASIC), or one or more integrated circuits configured to control program execution of the foregoing solution.

The communication interface 703 is configured to communicate with another device or a communication network.

The memory 702 may be a read-only memory (read-only memory, ROM), another type of static storage device that can store static information and an instruction, a random access memory (random access memory, RAM), or another type of dynamic storage device that can store information and an instruction; or may be an electrically erasable programmable read-only memory (Electrically Erasable Programmable Read-Only Memory, EEPROM), a compact disc read-only memory (Compact Disc Read-Only Memory, CD-ROM), other optical disk storage, optical disc storage (including a compact disc, a laser disc, an optical disc, a digital versatile disc, a Blu-ray disc, and the like), a magnetic disk storage medium, another magnetic storage device, or any other medium that can be used to carry or store expected program code in a form of an instruction or a data structure and that can be accessed by a computer. However, no limitation is imposed thereto. The memory may exist independently, and is connected to the processor by using the bus. Alternatively, the memory may be integrated with the processor.

The memory 702 is configured to store application code for performing the foregoing solution, and the processor 701 controls execution of the application code. The processor 701 is configured to execute the application code stored in the memory 702. For example, the code stored in the memory 702 may be used to perform the autonomous driving method provided in FIG. 2 or FIG. 3a.

It should be noted that, for functions of the device 70 described in this embodiment of this application, refer to the related descriptions of the method embodiments in FIG. 2 and FIG. 3a. Details are not described herein again.

An embodiment of this application further provides a computer storage medium. The computer-readable storage medium stores instructions. When the instructions are run on a computer or a processor, the computer or the processor is enabled to perform one or more steps of the method in any one of the foregoing embodiments. When each component module of the foregoing apparatus is implemented in a form of a software functional unit and sold or used as an independent product, the module may be stored in the computer-readable storage medium. Based on such an understanding, the technical solutions of this application essentially, or the part contributing to the conventional technology, or all or some of the technical solutions may be implemented in a form of a software product. The computer product is stored in the computer-readable storage medium.

The computer-readable storage medium may be an internal storage unit of the device in the foregoing embodiment, for example, a hard disk or a memory. Alternatively, the computer-readable storage medium may be an external storage device of the device, for example, a removable hard disk, a smart media card (Smart Media Card, SMC), a secure digital (Secure Digital, SD) card, and a flash card (Flash Card) that are configured on the device. Further, the foregoing computer-readable storage medium may include both the internal storage unit and the external storage device of the foregoing device. The foregoing computer-readable storage medium is configured to store the computer program and other programs and data that are used for the foregoing device. The computer-readable storage medium may be further configured to temporarily store data that has been output or is to be output.

A person of ordinary skill in the art may understand that all or some of the processes of the methods in the embodiments may be implemented by a computer program instructing relevant hardware. The computer program may be stored in a computer-readable storage medium. When the program runs, the processes of the methods in the embodiments are performed. The foregoing storage medium includes: any medium that can store program code, such as a ROM, a RAM, a magnetic disk, or an optical disc.

A sequence of the steps of the method in the embodiments of this application may be adjusted, combined, or deleted based on an actual requirement.

The modules in the apparatus in the embodiments of this application may be combined, divided, or deleted based on an actual requirement.

It may be understood that a person of ordinary skill in the art may be aware that, in combination with the examples described in the embodiments disclosed in the embodiments of this application, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

A person skilled in the art can appreciate that functions described in combination with various illustrative logical blocks, modules, and algorithm steps disclosed in the embodiments of this application may be implemented by hardware, software, firmware, or any combination thereof. If software is used for implementation, the functions described with reference to the illustrative logical blocks, modules, and steps may be stored in or transmitted over a computer-readable medium as one or more instructions or code and executed by a hardware-based processing unit. The computer-readable medium may include a computer-readable storage medium. The computer-readable storage medium corresponds to a tangible medium such as a data storage medium, or a communications medium including any medium that facilitates transfer of a computer program from one place to another place (for example, according to a communications protocol). In this manner, the computer-readable medium may generally correspond to: (1) a non-transitory tangible computer-readable storage medium, or (2) a communications medium, for example, a signal or a carrier. The data storage medium may be any available medium that can be accessed by one or more computers or one or more processors to retrieve instructions, code, and/or data structures for implementing the technologies described in this application. A computer program product may include a computer-readable medium.

It may be clearly understood by a person skilled in the art that, for the purpose of convenient and brief description, for a detailed working process of the foregoing system, apparatus, and unit, reference may be made to a corresponding process in the foregoing method embodiment. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the method described in embodiments of this application. The foregoing storage medium includes any medium, for example, a USB flash drive, a removable hard disk, a read-only memory (Read-Only Memory, ROM), a random access memory (Random Access Memory, RAM), a magnetic disk, an optical disc, or the like that can store program code.

The foregoing descriptions are merely specific implementations of this application, but are not intended to limit the protection scope of this application. Any variation or replacement readily figured out by a person skilled in the art within the technical scope of the appended claims shall fall within the protection scope of this application. Therefore, the protection scope of this application shall be subject to the protection scope of the claims.

**Claims**

1. An autonomous driving method performed by a cloud server, comprises:

   receiving (S202) vehicle attribute information of a target vehicle and traveling information of the target vehicle from the target vehicle;
   wherein the vehicle attribute information of the target vehicle comprises at least one of an autonomous driving capability of the target vehicle, sensor distribution information of the target vehicle, and a driving status of a driver in the target vehicle;
   wherein the traveling information of the target vehicle includes a current location of the target vehicle, or a start location and a destination location of the target vehicle, or a planned driving road section from a start location to a destination location;

obtaining (S204), from an autonomous-driving-policy-layer based on the traveling information, layer information of a first road section on which the target vehicle travels;

wherein the first road section is a road section on which the target vehicle travels;

wherein the layer information of the first road section includes at least one of static layer information of the first road section and dynamic layer information of the first road section, the static layer information of the first road section is used to indicate infrastructure information of the first road section and includes at least one of a lane attribute, digital device information, and greenbelt information, and the dynamic layer information of the first road section is used to indicate dynamic traffic information of the first road section and includes at least one of weather information, road surface information, a congestion status of the first road section in a first time period, a probability that a pedestrian and a non-motor vehicle travel on the first road section in the first time period, and an accident probability that a driving accident occurs on the first road section in the first time period;

wherein the autonomous-driving-policy-layer is a subset of an autonomous driving map, and includes the static layer information and the dynamic layer information;

obtaining (S206), a first autonomous driving policy for the target vehicle traveling on the first road section, based on the layer information of the first road section and the vehicle attribute information of the target vehicle;

wherein the obtaining a first autonomous driving policy for the target vehicle traveling on the first road section based on the layer information of the first road section and the vehicle attribute information of the target vehicle comprises: obtaining a first safe passage probability based on the layer information of the first road section and the vehicle attribute information of the target vehicle, and then obtaining, based on a correspondence between a driving policy and a safe passage probability, the first driving policy corresponding to the first safe passage probability;

wherein the obtaining a first safe passage probability based on the layer information of the first road section and the vehicle attribute information of the target vehicle includes: calculating the first safe passage probability by using a first model, where the first model includes at least one information item and a weight parameter corresponding to the at least one information item, where the at least one information item is an information item extracted from the layer information of the first road section and the vehicle attribute information of the target vehicle, and the weight parameter is used to indicate importance of an information item when the information item is used to determine the first safe passage probability; wherein the first model is a trained neural network model; and

sending (S208) the first autonomous driving policy to the target vehicle;

wherein the method further comprises:

obtaining a second autonomous driving policy for the target vehicle traveling on the first road section, wherein the second autonomous driving policy is determined based on sensor data obtained by the target vehicle; and sending to the target vehicle, prompt information for adopting the first autonomous driving policy, when a similarity between the first autonomous driving policy and the second autonomous driving policy is less than a first threshold.

2. The method according to claim 1, wherein the autonomous driving policy includes an autonomous driving level, or an instruction for instructing the target vehicle to accelerate, decelerate, proceed, stop, or start, or an instruction for instructing a speed, an acceleration, a movement direction, or a location of the target vehicle.

3. An autonomous driving method performed by a target vehicle, comprises:

sending (S202), vehicle attribute information of the target vehicle and traveling information of the target vehicle to a cloud server as defined in any one of claims 1 - 6;

wherein the vehicle attribute information of the target vehicle comprises at least one of an autonomous driving capability of the target vehicle, sensor distribution information of the target vehicle, and a driving status of a driver in the target vehicle;

wherein the traveling information of the target vehicle includes a current location of the target vehicle, or a start location and a destination location of the target vehicle, or a planned driving road section from a start location to a destination location;

receiving (S208), a first autonomous driving policy for the target vehicle traveling on the first road section, sent from the cloud server; and

performing, autonomous driving on the target vehicle according to the first autonomous driving policy;

wherein the method further comprises:

obtaining, a second autonomous driving policy for the target vehicle traveling on the first road section, wherein the second autonomous driving policy is determined based on sensor data obtained by the target vehicle; and

receiving prompt information sent from the cloud server for adopting the first autonomous driving policy, when it is determined that a similarity between the first autonomous driving policy and the second autonomous driving policy is less than a first threshold.

4. The method according to claim 3, wherein the autonomous driving policy includes an autonomous driving level, or an instruction for instructing the target vehicle to accelerate, decelerate, proceed, stop, or start, or an instruction for instructing a speed, an acceleration, a movement direction, or a location of the target vehicle.

5. A cloud server, comprising units configured to perform the steps in the method according to any one of claims 1 to 2.

6. An autonomous driving apparatus, comprising units configured to perform the steps in the method according to any one of claims 3 to 4.

7. A computer-readable storage medium, comprising a program, wherein when the program is executed by a processor, the method according to any one of claims 1 to 2 is performed.

8. A computer-readable storage medium, comprising a program, wherein when the program is executed by a processor, the method according to any one of claims 3 to 4 is performed.

**Patentansprüche**

1. Verfahren zum autonomen Fahren, das durch einen Cloud-Server durchgeführt wird, umfassend:

Empfangen (S202) von Fahrzeugattributinformationen eines Zielfahrzeugs und Fortbewegungsinformationen des Zielfahrzeugs von dem Zielfahrzeug;

wobei die Fahrzeugattributinformationen des Zielfahrzeugs mindestens eines von einer autonomen Fahrfähigkeit des Zielfahrzeugs, Sensorverteilungsinformationen des Zielfahrzeugs und einem Fahrstatus eines Fahrers in dem Zielfahrzeug umfassen;

wobei die Fortbewegungsinformationen des Zielfahrzeugs einen aktuellen Standort des Zielfahrzeugs oder einen Startstandort und einen Zielstandort des Zielfahrzeugs oder einen geplanten Fahrstraßenabschnitt von einem Startstandort zu einem Zielstandort beinhalten;

Erhalten (S204) von Schichtinformationen eines ersten Straßenabschnitts, auf dem sich das Zielfahrzeug fortbewegt, von einer Schicht für Richtlinien zum autonomen Fahren basierend auf den Fortbewegungsinformationen;

wobei der erste Straßenabschnitt ein Straßenabschnitt ist, auf dem sich das Zielfahrzeug fortbewegt;

wobei die Schichtinformationen des ersten Straßenabschnitts mindestens eines von statischen Schichtinformationen des ersten Straßenabschnitts und dynamischen Schichtinformationen des ersten Straßenabschnitts beinhalten, die statischen Schichtinformationen des ersten Straßenabschnitts verwendet werden, um Infrastrukturinformationen des ersten Straßenabschnitts anzuzeigen, und mindestens eines von einem Spurattribut, digitalen Vorrichtungsinformationen und Grüngürtelinformationen beinhalten und die dynamischen Schichtinformationen des ersten Straßenabschnitts verwendet werden, um dynamische Verkehrsinformationen des ersten Straßenabschnitts anzuzeigen, und mindestens eines von Wetterinformationen, Straßenoberflächeninformationen, einem Staustatus des ersten Straßenabschnitts in einem ersten Zeitraum, einer Wahrscheinlichkeit, dass sich in dem ersten Zeitraum ein Fußgänger und ein Nicht-Kraftfahrzeug auf dem ersten Straßenabschnitt fortbewegen, und einer Unfallwahrscheinlichkeit, dass in dem ersten Zeitraum ein Fahrunfall auf dem ersten Straßenabschnitt auftritt, beinhalten;

wobei die Schicht für Richtlinien zum autonomen Fahren eine Teilmenge einer Karte zum autonomen Fahren ist und die statischen Schichtinformationen und die dynamischen Schichtinformationen beinhaltet;

Erhalten (S206) einer ersten Richtlinie zum autonomen Fahren für das Zielfahrzeug, das sich auf dem ersten Straßenabschnitt fortbewegt, basierend auf den Schichtinformationen des ersten Straßenabschnitts und den Fahrzeugattributinformationen des Zielfahrzeugs;

wobei das Erhalten einer ersten Richtlinie zum autonomen Fahren für das Zielfahrzeug, das sich auf dem ersten Straßenabschnitt fortbewegt, basierend auf den Schichtinformationen des ersten Straßenabschnitts und den Fahrzeugattributinformationen des Zielfahrzeugs Folgendes umfasst: Erhalten einer ersten Wahrscheinlichkeit für eine sichere Durchfahrt basierend auf den Schichtinformationen des ersten Straßenabschnitts und den Fahrzeugattributinformationen des Zielfahrzeugs und dann Erhalten der ersten Richtlinie zum Fahren, die der ersten Wahrscheinlichkeit für eine sichere Durchfahrt entspricht, basierend auf einer Entsprechung zwischen einer Richtlinie zum Fahren und einer Wahrscheinlichkeit für eine sichere Durchfahrt;

wobei das Erhalten einer ersten Wahrscheinlichkeit für eine sichere Durchfahrt basierend auf den Schichtinformationen des ersten Straßenabschnitts und den Fahrzeugattributinformationen des Zielfahrzeugs Folgendes beinhaltet: Berechnen der ersten Wahrscheinlichkeit für eine sichere Durchfahrt mithilfe eines ersten Modells, wobei das erste Modell mindestens ein Informationselement und einen Gewichtungsparameter beinhaltet, der dem mindestens einen Informationselement entspricht, wobei das mindestens eine Informationselement ein Informationselement ist, das aus den Schichtinformationen des ersten Straßenabschnitts und den Fahrzeugattributinformationen des Zielfahrzeugs extrahiert ist, und der Gewichtungsparameter verwendet wird, um eine Wichtigkeit eines Informationselements anzuzeigen, wenn das Informationselement verwendet wird, um die erste Wahrscheinlichkeit für eine sichere Durchfahrt zu bestimmen; wobei das erste Modell ein trainiertes Modell für ein neuronales Netzwerk ist; und

Senden (S208) der ersten Richtlinie zum autonomen Fahren an das Zielfahrzeug;
wobei das Verfahren ferner Folgendes umfasst:

Erhalten einer zweiten Richtlinie zum autonomen Fahren für das Zielfahrzeug, das sich auf dem ersten Straßenabschnitt fortbewegt, wobei die zweite Richtlinie zum autonomen Fahren basierend auf durch das Zielfahrzeug erhaltenen Sensordaten bestimmt wird; und

Senden von Aufforderungsinformationen zum Anwenden der ersten Richtlinie zum autonomen Fahren an das Zielfahrzeug, wenn eine Ähnlichkeit zwischen der ersten Richtlinie zum autonomen Fahren und der zweiten Richtlinie zum autonomen Fahren kleiner als ein erster Schwellenwert ist.

2. Verfahren nach Anspruch 1, wobei die Richtlinie zum autonomen Fahren eine Stufe für autonomes Fahren oder eine Anweisung zum Anweisen des Zielfahrzeugs, zu beschleunigen, zu bremsen, weiterzufahren, anzuhalten oder zu starten, oder eine Anweisung zum Anweisen einer Geschwindigkeit, einer Beschleunigung, einer Bewegungsrichtung oder eines Standorts des Zielfahrzeugs beinhaltet.

3. Verfahren zum autonomen Fahren, das durch ein Zielfahrzeug durchgeführt wird, umfassend:

Senden (S202) von Fahrzeugattributinformationen des Zielfahrzeugs und Fortbewegungsinformationen des Zielfahrzeugs an einen Cloud-Server nach einem der Ansprüche 1 bis 6;
wobei die Fahrzeugattributinformationen des Zielfahrzeugs mindestens eines von einer autonomen Fahrfähigkeit des Zielfahrzeugs, Sensorverteilungsinformationen des Zielfahrzeugs und einem Fahrstatus eines Fahrers in dem Zielfahrzeug umfassen;
wobei die Fortbewegungsinformationen des Zielfahrzeugs einen aktuellen Standort des Zielfahrzeugs oder einen Startstandort und einen Zielstandort des Zielfahrzeugs oder einen geplanten Fahrstraßenabschnitt von einem Startstandort zu einem Zielstandort beinhalten;
Empfangen (S208) einer von dem Cloud-Server gesendeten ersten Richtlinie zum autonomen Fahren für das Zielfahrzeug, das sich auf dem ersten Straßenabschnitt fortbewegt; und
Durchführen von autonomem Fahren mit dem Zielfahrzeug gemäß der ersten Richtlinie zum autonomen Fahren;
wobei das Verfahren ferner Folgendes umfasst:

Erhalten einer zweiten Richtlinie zum autonomen Fahren für das Zielfahrzeug, das sich auf dem ersten Straßenabschnitt fortbewegt, wobei die zweite Richtlinie zum autonomen Fahren basierend auf durch das Zielfahrzeug erhaltenen Sensordaten bestimmt wird; und
Empfangen von von dem Cloud-Server gesendeten Aufforderungsinformationen zum Anwenden der ersten Richtlinie zum autonomen Fahren, wenn bestimmt wird, dass eine Ähnlichkeit zwischen der ersten Richtlinie zum autonomen Fahren und der zweiten Richtlinie zum autonomen Fahren kleiner als ein erster Schwellenwert ist.

4. Verfahren nach Anspruch 3, wobei die Richtlinie zum autonomen Fahren eine Stufe für autonomes Fahren oder eine Anweisung zum Anweisen des Zielfahrzeugs, zu beschleunigen, zu bremsen, weiterzufahren, anzuhalten oder zu starten, oder eine Anweisung zum Anweisen einer Geschwindigkeit, einer Beschleunigung, einer Bewegungsrichtung oder eines Standorts des Zielfahrzeugs beinhaltet.

5. Cloud-Server, umfassend Einheiten, die dazu konfiguriert sind, die Schritte in dem Verfahren nach einem der Ansprüche 1 bis 2 durchzuführen.

6. Einrichtung zum autonomen Fahren, umfassend Einheiten, die dazu konfiguriert sind, die Schritte in dem Verfahren nach einem der Ansprüche 3 bis 4 durchzuführen.

7. Computerlesbares Speichermedium, umfassend ein Programm, wobei, wenn das Programm durch einen Prozessor ausgeführt wird, das Verfahren nach einem der Ansprüche 1 bis 2 durchgeführt wird.

8. Computerlesbares Speichermedium, umfassend ein Programm, wobei, wenn das Programm durch einen Prozessor ausgeführt wird, das Verfahren nach einem der Ansprüche 3 bis 4 durchgeführt wird.

**Revendications**

1. Procédé de conduite autonome réalisé par un serveur cloud, comprenant :

la réception (S202) d'informations d'attributs de véhicule d'un véhicule cible et d'informations de déplacement du véhicule cible en provenance du véhicule cible ;
dans lequel les informations d'attributs de véhicule du véhicule cible comprennent au moins l'un parmi une capacité de conduite autonome du véhicule cible, des informations de répartition des capteurs du véhicule cible et un état de conduite d'un conducteur dans le véhicule cible ;
dans lequel les informations de déplacement du véhicule cible comportent une position actuelle du véhicule cible, ou une position de départ et une position de destination du véhicule cible, ou un tronçon routier prévu depuis une position de départ vers une position de destination ;
l'obtention (S204), à partir d'une couche de politique de conduite autonome basée sur les informations de déplacement, d'informations de couche d'un premier tronçon routier sur lequel le véhicule cible se déplace ;
dans lequel le premier tronçon routier est un tronçon routier sur lequel le véhicule cible se déplace ;
dans lequel les informations de couche du premier tronçon routier comportent au moins l'une parmi des informations de couche statique du premier tronçon routier et des informations de couche dynamique du premier tronçon routier, les informations de couche statique du premier tronçon routier sont utilisées pour indiquer des informations d'infrastructure du premier tronçon routier et comportent au moins l'un parmi un attribut de voie, des informations relatives à un dispositif numérique et des informations de terre-plein végétalisé, et les informations de couche dynamique du premier tronçon routier sont utilisées pour indiquer des informations de trafic dynamique du premier tronçon routier et comportent au moins l'une parmi des informations météorologiques, des informations relatives à l'état de la chaussée, un état de congestion du premier tronçon routier pendant une première période, une probabilité qu'un piéton et un véhicule non motorisé se déplacent sur le premier tronçon routier pendant la première période, et une probabilité d'accident indiquant la survenue d'un accident de la route sur le premier tronçon routier pendant la première période ;
dans lequel la couche de politique de conduite autonome est un sous-ensemble d'une carte de conduite autonome, et comporte les informations de couche statique et les informations de couche dynamique ;
l'obtention (S206), d'une première politique de conduite autonome pour le véhicule cible se déplaçant sur le premier tronçon routier, sur la base des informations de couche du premier tronçon routier et des informations d'attribut de véhicule du véhicule cible ;
dans lequel l'obtention d'une première politique de conduite autonome pour le véhicule cible se déplaçant sur le premier tronçon routier sur la base des informations de couche du premier tronçon routier et des informations d'attribut de véhicule du véhicule cible comprend : l'obtention d'une première probabilité de passage sûr sur la base des informations de couche du premier tronçon routier et des informations d'attribut de véhicule du véhicule cible, puis l'obtention, sur la base d'une correspondance entre une politique de conduite et une probabilité de passage sûr, de la première politique de conduite correspondant à la première probabilité de passage sûr ;
dans lequel l'obtention d'une première probabilité de passage sûr, sur la base des informations de couche du premier tronçon routier et des informations d'attribut de véhicule du véhicule cible, comporte : le calcul de la première probabilité de passage sûr à l'aide d'un premier modèle, où le premier modèle comporte au moins un élément d'information et un paramètre de pondération correspondant à l'au moins un élément d'information, où l'au moins un élément d'information est un élément d'information extrait à partir des informations de couche du premier tronçon routier et des informations d'attribut de véhicule du véhicule cible, et le paramètre de pondération est utilisé pour indiquer l'importance d'un élément d'information lorsque l'élément d'information est utilisé pour déterminer la première probabilité de passage sûr ; dans lequel le premier modèle est un modèle de réseau neuronal entraîné ; et

l'envoi (S208) de la première politique de conduite autonome au véhicule cible ;
dans lequel le procédé comprend également :

l'obtention d'une seconde politique de conduite autonome pour le véhicule cible se déplaçant sur le premier tronçon routier, dans lequel la seconde politique de conduite autonome est déterminée sur la base de données de capteurs obtenues par le véhicule cible ; et
l'envoi au véhicule cible, d'informations d'invite en vue de l'adoption de la première politique de conduite autonome, lorsqu'une similarité entre la première politique de conduite autonome et la seconde politique de conduite autonome est inférieure à un premier seuil.

2. Procédé selon la revendication 1, dans lequel la politique de conduite autonome comporte un niveau de conduite autonome, ou une instruction destinée à ordonner au véhicule cible d'accélérer, de décélérer, d'avancer, de s'arrêter ou de démarrer, ou une instruction destinée à ordonner une vitesse, une accélération, une direction de mouvement ou une position du véhicule cible.

3. Procédé de conduite autonome réalisé par un véhicule cible, qui comprend :

l'envoi (S202), d'informations d'attributs de véhicule du véhicule cible et d'informations de déplacement du véhicule cible à un serveur cloud selon l'une quelconque des revendications 1 à 6 ;
dans lequel les informations d'attributs de véhicule du véhicule cible comprennent au moins l'un parmi une capacité de conduite autonome du véhicule cible, des informations de répartition des capteurs du véhicule cible et un état de conduite d'un conducteur dans le véhicule cible ;
dans lequel les informations de déplacement du véhicule cible comportent une position actuelle du véhicule cible, ou une position de départ et une position de destination du véhicule cible, ou un tronçon routier prévu depuis une position de départ vers une position de destination ;
la réception (S208), d'une première politique de conduite autonome pour le véhicule cible se déplaçant sur le premier tronçon routier, envoyée depuis le serveur cloud ; et
la réalisation d'une conduite autonome du véhicule cible selon la première politique de conduite autonome ;
dans lequel le procédé comprend également :

l'obtention d'une seconde politique de conduite autonome pour le véhicule cible se déplaçant sur le premier tronçon routier, dans lequel la seconde politique de conduite autonome est déterminée sur la base de données de capteurs obtenues par le véhicule cible ; et
la réception d'informations d'invite envoyées depuis le serveur cloud en vue de l'adoption de la première politique de conduite autonome, lorsqu'il est déterminé qu'une similarité entre la première politique de conduite autonome et la seconde politique de conduite autonome est inférieure à un premier seuil.

4. Procédé selon la revendication 3, dans lequel la politique de conduite autonome comporte un niveau de conduite autonome, ou une instruction destinée à ordonner au véhicule cible d'accélérer, de décélérer, d'avancer, de s'arrêter ou de démarrer, ou une instruction destinée à définir une vitesse, une accélération, une direction de mouvement ou une position du véhicule cible.

5. Serveur cloud, comprenant des unités configurées pour réaliser les étapes du procédé selon l'une quelconque des revendications 1 à 2.

6. Appareil de conduite autonome, comprenant des unités configurées pour réaliser les étapes du procédé selon l'une quelconque des revendications 3 à 4.

7. Support de stockage lisible par ordinateur, comprenant un programme, dans lequel lorsque le programme est exécuté par un processeur, le procédé selon l'une quelconque des revendications 1 à 2 est réalisé.

8. Support de stockage lisible par ordinateur, comprenant un programme, dans lequel lorsque le programme est exécuté par un processeur, le procédé selon l'une quelconque des revendications 3 à 4 est réalisé.

FIG. 1a

FIG. 1b

Light snow

T1 moment

Heavy snow

Target vehicle

Other vehicles

Greenbelt information

Road boundary information

Lane line

Road section 3

FIG. 1c

Sunny

T1 moment

Cloudy

Greenbelt information

Target vehicle

Lane line

In a road section 1, a historical serial probability of pedestrians in a first time segment is 60%

In the road section 1, moderate congestion in the first time segment

Digital information device

Road section 4

Tree falling across the road

Road boundary information

FIG. 1d

EP 4 071 661 B1

20

Cloud server

Network

Network

Network

...

...

Vehicle 2

Vehicle M

10

110

Autonomous driving apparatus

Vehicle 1

FIG. 1e

Autonomous driving apparatus 110

Travel system 102

Engine 118

Transmission apparatus 120

Energy source 119

Wheel 121

Sensor system 104

Global positioning system 122

Inertial measurement unit 124

Radar 126

Laser rangefinder 128

Camera 130

Control system 106

Steering system 132

Throttle 134

Braking unit 136

Computer vision system 140

Route control system 142

Obstacle avoidance system 144

Peripheral device 108

Wireless communication system 146

Vehicle-mounted computer 148

Microphone 150

Loudspeaker 152

Processor 113

Instruction 115

Data storage apparatus 114

Computer system 112

Power supply 110

User interface 116

FIG. 1f

FIG. 1g

```
┌──────────┐                                          ┌──────────┐
│  Target  │                                          │  Cloud   │
│ vehicle  │                                          │  server  │
└────┬─────┘                                          └────┬─────┘
     │   S200: Report vehicle attribute information and traveling
     │      information of the target vehicle to the cloud server
     │─────────────────────────────────────────────────────►│
     │                                            ┌──────────┴──────────┐
     │                                            │ S202: Receive the   │
     │                                            │ vehicle attribute   │
     │                                            │ information and the │
     │                                            │ traveling           │
     │                                            │ information of the  │
     │                                            │ target vehicle that │
     │                                            │ are reported by the │
     │                                            │ target vehicle      │
     │                                            └──────────┬──────────┘
     │                                            ┌──────────┴──────────┐
     │                                            │ S204: Obtain, from  │
     │                                            │ a layer of an       │
     │                                            │ automatic driving   │
     │                                            │ policy based on the │
     │                                            │ traveling           │
     │                                            │ information, layer  │
     │                                            │ information of a    │
     │                                            │ first road section  │
     │                                            │ on which the target │
     │                                            │ vehicle travels     │
     │                                            └──────────┬──────────┘
     │                                            ┌──────────┴──────────┐
     │                                            │ S206: The cloud     │
     │                                            │ server obtains a    │
     │                                            │ first driving       │
     │                                            │ policy based on the │
     │                                            │ layer information   │
     │                                            │ of the first road   │
     │                                            │ section and the     │
     │                                            │ vehicle attribute   │
     │                                            │ information of the  │
     │                                            │ target vehicle      │
     │                                            └──────────┬──────────┘
     │    S208: Send the first driving policy to the target vehicle
     │◄─────────────────────────────────────────────────────│
     │                                                       │
```

FIG. 2

| Target vehicle | | Cloud server |
|---|---|---|

S200: Report vehicle attribute information and traveling information of the target vehicle to the cloud server

S202: Receive the vehicle attribute information and the traveling information of the target vehicle that are reported by the target vehicle

S204: Obtain, from a layer of an automatic driving policy based on the traveling information, layer information of a first road section on which the target vehicle travels

S206: The cloud server obtains a first driving policy based on the layer information of the first road section and the vehicle attribute information of the target vehicle

S208: Send the first driving policy to the target vehicle

S2010: Receive the first driving policy sent by the cloud server

S2012: Perform automatic driving on the target vehicle according to the first driving policy

FIG. 3a

Input image data

↓

Select a candidate area

↓

Extract a feature

Select a training sample

↓

Extract a feature → Training Classifier → Classify

↓

Perform box-selection on an identified object

FIG. 3b

EP 4 071 661 B1

Convolutional neural network (CNN)
100

FIG. 3c

```
                    ┌─────────────────────────┐
                    │     Output layer        │
                    │       140               │
                    ├─────────────────────────┤
                    │    Hidden layer n       │
   Neural           │       13n               │
   network          ├─────────────────────────┤
   layer            │    Hidden layer 2       │
   130              │       132               │
                    ├─────────────────────────┤
                    │    Hidden layer 1       │
                    │       131               │
                    └─────────────────────────┘
```

FIG. 3d

```
┌──────────┐                                              ┌──────────┐
│  Target  │                                              │  Cloud   │
│ vehicle  │                                              │  server  │
└──────────┘                                              └──────────┘
```

S400: Report traveling information to the cloud server

┌────────────────────────────────────────────┐
│ S402: Receive the traveling                  │
│ information reported by the target           │
│ vehicle                                      │
└────────────────────────────────────────────┘

┌────────────────────────────────────────────┐
│ S404:Obtain, from a layer of an              │
│ autonomous driving policy based on           │
│ the traveling information, layer             │
│ information of a first road section on       │
│ which the target vehicle travels             │
└────────────────────────────────────────────┘

S406: Send the layer information of the first
road section to the target vehicle

┌────────────────────────────────────────────┐
│ S408: The target vehicle receives            │
│ the layer information of the first           │
│ road section, and obtains a first            │
│ driving policy based on the layer            │
│ information of the first road section        │
│ and vehicle attribute information of         │
│ the target vehicle                           │
└────────────────────────────────────────────┘

┌────────────────────────────────────────────┐
│ S4010: Perform autonomous driving            │
│ on the target vehicle according to           │
│ the first driving policy                     │
└────────────────────────────────────────────┘

FIG. 4

50

| Receiving unit | First obtaining unit | Second obtaining unit | First sending unit |
|---|---|---|---|
| 500 | 502 | 504 | 506 |

Cloud server

FIG. 5

60

| Receiving unit | Control unit |
|---|---|
| 600 | 602 |

Autonomous driving apparatus

FIG. 6

— 70

Cloud server

— 701

Processor

703

Communication
interface

— 702

Memory

Application
program code

FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2019225212 A1